# EUROPÄISCHE PATENTSCHRIFT

(11) **EP 3 593 653 B1**
(45) Veröffentlichungstag und Bekanntmachung des Hinweises auf die Patenterteilung: **29.03.2023**
(21) Anmeldenummer: 19182343.4
(22) Anmeldetag: 25.06.2019
(51) Int. Cl.: A24C 5/34

(54) **MESSVORRICHTUNG FÜR EINEN SAUGBANDFÖRDERER UND SAUGBANDFÖRDERER MIT EINER MESSVORRICHTUNG**
MEASURING DEVICE FOR A SUCTION BELT CONVEYOR AND SUCTION BELT CONVEYOR WITH A MEASURING DEVICE
DISPOSITIF DE MESURE POUR UN CONVOYEUR À BANDE ASPIRANTE ET CONVOYEUR À BANDE ASPIRANTE DOTÉ D'UN DISPOSITIF DE MESURE

(30) Priorität: 09.07.2018 DE 102018116533
(43) Veröffentlichungstag der Anmeldung: 15.01.2020
(73) Patentinhaber: Körber Technologies GmbH, 21033 Hamburg (DE)
(72) Erfinder: Schubert, Andreas, 21493 Schwarzenbek (DE); Müller, Johannes, 22767 Hamburg (DE); Leifels, Tobias, 22111 Hamburg (DE); Baron, Denis, 21465 Reinbek (DE); Goetz, Jürgen, 22885 Barsbüttel (DE); Behncke, Hans-Hermann, 25451 Quickborn (DE)
(74) Vertreter: Eisenführ Speiser

(56) Entgegenhaltungen:
- DE-A1- 19 705 260
- DE-A1-102015 105 353
- DE-A1-102015 119 453
- DE-U1-202005 010 375

## Beschreibung

Die Erfindung betrifft eine Messvorrichtung für einen Saugbandförderer einer Strangmaschine der Tabak verarbeitenden Industrie zur Förderung von Material, insbesondere Tabak, wobei der Saugbandförderer wenigstens einen nach außen, bevorzugt nach unten, offenen Strangführungskanal aufweist, dessen Hohlraum durch zwei seitliche Kanalwangen und ein Saugband entlang eines Förderweges begrenzt ist, wobei die Messvorrichtung zur Bestimmung von Eigenschaften des entlang des Förderweges geförderten Materials vorgesehen ist und einen Körper, wenigstens eine Mikrowellenmesseinrichtung und wenigstens einen Resonatorhohlraum aufweist, wobei der Körper eine erste Stirnseite und eine gegenüberliegende zweite Stirnseite sowie einen in beide Stirnseiten mündenden und nach außen, bevorzugt in der Einbaustellung der Messvorrichtung nach unten, offenen Durchbruch aufweist und so ausgebildet ist, dass der Körper in der Einbaustellung der Messvorrichtung unter Ausrichtung des Durchbruches zum Hohlraum des Strangführungskanals mit einer seiner Stirnseiten an den Strangführungskanal anordbar oder mit seinen beiden Stirnseiten in den Strangführungskanal einpassbar ist, und wobei der Resonatorhohlraum innerhalb des Körpers benachbart zum Durchbruch ausgebildet und über mindestens ein Messfenster zum Durchbruch hin offen ist. Ferner betrifft die Erfindung einen Saugbandförderer mit einer derartigen Messvorrichtung.

Die Erfindung betrifft generell das Gebiet der Strangherstellung von Materialien der Tabak verarbeitenden Industrie, insbesondere die Herstellung eines Tabakstrangs. Um eine gleichmäßig hohe Materialqualität sicherzustellen, wird üblicherweise mit Hilfe verschiedener Messvorrichtungen die Qualität des Strangmaterials überwacht, wobei besonders Eigenschaften wie Menge, Dichte, Feuchtigkeit usw. des Materials überwacht werden. Hierzu werden verschiedene Messverfahren verwendet, beispielsweise optische Messverfahren, HF-Messverfahren, Mikrowellenmessverfahren oder Messverfahren unter Verwendung von β-Strahlern.

Bei einem Saugbandförderer, wie er beispielsweise aus der DE 10 2011 082 625 A1 bekannt ist, wird loses Material der Tabak verarbeitenden Industrie und werden insbesondere Tabakfasern von unten in einen Strangführungskanal einer Strangführungseinrichtung geschleudert, und zwar dort gegen die Unter- bzw. Außenseite eines den Boden des Strangführungskanals bildenden, unteren Trums eines luftdurchlässigen Saugbandes, das von seiner Rück- bzw. Oberseite her von einer Saugeinrichtung mit Unterdruck beaufschlagt wird. Dadurch wird am Saugband von unten aus den Tabakfasern ein strangförmiger Tabakfaserkuchen aufgeschauert, der somit am unteren Trum des Saugbandes durch von der Saugeinrichtung gesaugter Luft gehalten wird. Durch die Bewegung des Saugbandes entlang des Strangführungskanals wird der darin aufgeschauerte und angesammelte Tabakfaserkuchen zu einem Tabakstrang geformt und dabei hängend gefördert. Der untere Trum des Saugbandes erstreckt sich durch den Strangführungskanal von dessen Anfang, wo sich die Strangbildungszone befindet, bis zu einem Egalisator oder Trimmer zur Entfernung von überschüssigen Tabakfasern. Somit bildet der Strangführungskanal denjenigen Bereich, in dem die Tabakfasern von unten auf das Saugband aufgeschauert werden und daraus der Tabakstrang gebildet wird. Das Saugband ist ein Verschleißteil, das etwa zu jeder Schicht ausgetauscht wird; aus diesem Grunde ist der Strangführungskanal nach unten offen. Nach Verlassen des Strangführungskanals findet eine Trennung des Saugbandes vom Tabakstrang statt, der dann durch ein nachgeschaltetes Format geführt wird, in dem er mit einem Zigarettenpapierstreifen umhüllt wird.

Zur Bestimmung der Materialeigenschaften von Tabaksträngen war es üblich, entsprechende Messvorrichtungen dort vorzusehen, wo der Tabakstock bereits mit dem Zigarettenpapier umhüllt ist. Dies lag zum einen darin begründet, dass der Tabakstock dort mit einer Messvorrichtung relativ gut zu erreichen ist. Zum anderen hat der Tabakstock dann schon seine endgültige Form. Der Nachteil dieser bekannten Messverfahren war, dass der Einfluss des Papiers bei der Anordnung der Messvorrichtungen an dieser Position stets zusätzlich zu berücksichtigen war.

Deshalb schlägt die WO 2016/162292 A1 vor, eine Messvorrichtung vorzusehen, bei welcher eine elektromagnetische Messvorrichtung verwendet wird, die in den Kanalwangen des Saugbandförderers integriert ist. Auf diese Weise lässt sich eine Messung bereits in einem sehr frühen Stadium, nämlich im Saugbandförderer, realisieren, wo das Material noch nicht durch ein Umhüllungsmaterial umhüllt ist. Die Messung im Strangführungskanal des Saugbandförderers hat den Vorteil, dass nicht nur bereits zu einem frühen Zeitpunkt, sondern auch ohne störende Einflüsse eine Messung von Materialeigenschaften wie beispielsweise der Dichte bzw. des Gewichts des Tabaks möglich wird. Eine frühzeitige Messung bietet den Vorteil, dass Abweichungen von den vorgegebenen Werten schnell erkannt und damit eine umgehende Regelung z.B. der Tabakförderung durchgeführt werden kann, wodurch Tabakausschuss vorteilhaft reduziert werden kann. Ferner schlägt die WO 2016/162292 A1 konkret vor, als Messeinrichtung eine Mikrowellenmesseinrichtung mit wenigstens einem Resonatorhohlraum zu verwenden, da die Mikrowellenmesstechnik eine Vielzahl von Möglichkeiten bietet, die Eigenschaften von Materialien zu bestimmen.

Des Weiteren ist aus der DE 10 2015 119 453 A1 eine Vorrichtung zur Bestimmung des Anteils mindestens eines Zusatzstoffes in einem tabakhaltigen Stoff bekannt, die eine Sensoranordnung aufweist, die in einer Messbeziehung zu dem tabakhaltigen Stoff angeordnet und zum Betrieb mit mindestens einem ersten elektromagnetischen Wechselfeld mit einer ersten Messfrequenz und einem zweiten elektromagnetischen Wechselfeld mit einer von der ersten Messfrequenz verschiedenen zweiten Messfrequenz sowie zur Ausgabe von Signalen, die Informationen aus der Wechselwirkung der ersten und zweiten elektromagnetischen Wechselfelder mit dem tabakhaltigen Stoff enthalten, eingerichtet ist. Diese bekannte Vorrichtung weist ferner eine Datenverarbeitungseinrichtung auf, die durch Auswertung der Signale von der Sensoranordnung zur Ermittlung von zwei unabhängigen Messgrößen zu jeder der mindestens zwei Messfrequenzen und zur Bestimmung der Feuchte, des Tabakanteils und des Anteils des mindestens einen Zusatzstoffes aus den mindestens vier ermittelten Messgrößen eingerichtet ist.

Eine Messvorrichtung gemäß des Oberbegriffs des Anspruchs 1 ist aus der DE 10 2015 105353 A bekannt.

Es ist eine Aufgabe der vorliegenden Erfindung, eine Messvorrichtung der eingangs genannten Art zu verbessern und insbesondere an die Gegebenheiten eines Saugbandförderers noch besser anzupassen.

Gelöst wird diese Aufgabe gemäß einem ersten Aspekt der vorliegenden Erfindung mit einer Messvorrichtung für einen Saugbandförderer einer Strangmaschine der Tabak verarbeitenden Industrie zur Förderung von Material, insbesondere Tabak, wobei der Saugbandförderer wenigstens einen nach außen, bevorzugt nach unten, offenen Strangführungskanal aufweist, dessen Hohlraum durch zwei seitliche Kanalwangen und ein Saugband entlang eines Förderweges begrenzt ist, wobei die Messvorrichtung zur Bestimmung von Eigenschaften des entlang des Förderweges geförderten Materials vorgesehen ist und einen Körper, wenigstens eine Mikrowellenmesseinrichtung und wenigstens einen Resonatorhohlraum aufweist, wobei der Körper eine erste Stirnseite und eine gegenüberliegende zweite Stirnseite sowie einen in beide Stirnseiten mündenden und mit einem nach außen, bevorzugt in der Einbaustellung der Messvorrichtung nach unten, offenen Bereich versehenen Durchbruch aufweist und so ausgebildet ist, dass der Körper in der Einbaustellung der Messvorrichtung unter Ausrichtung des Durchbruches zum Hohlraum des Strangführungskanals mit einer seiner Stirnseiten an den Strangführungskanal anordbar oder mit seinen beiden Stirnseiten in den Strangführungskanal einpassbar ist, und wobei der Resonatorhohlraum innerhalb des Körpers benachbart zum Durchbruch ausgebildet und über mindestens ein Messfenster zum Durchbruch hin offen ist, wobei die Mikrowellenmesseinrichtung in mindestens eine Hochfrequenzeinheit und in eine Verarbeitungseinheit unterteilt ist und die mindestens eine Hochfrequenzeinheit benachbart zum Durchbruch und die Verarbeitungseinheit vom Durchbruch entfernt am und/oder im Körper angeordnet ist.

Durch die erfindungsgemäße Aufteilung der Mikrowellenmesseinrichtung in mindestens eine Hochfrequenzeinheit und in eine Verarbeitungseinheit bzw. Prozessoreinheit und durch die erfindungsgemäße Anordnung der mindestens einen Hochfrequenzeinheit benachbart zum Durchbruch, der bei Einbau der Messvorrichtung in den Saugbandförderer zum Hohlraum des Strangführungskanals ausgerichtet ist, und der Verarbeitungseinheit vom Durchbruch entfernt am und/oder im Körper lässt sich auf einfache Weise und zugleich geschickte Weise eine besonders raumsparende Installation der Mikrowellenmesseinrichtung realisieren. Somit wird die Mikrowellenmesseinrichtung nicht nur konstruktiv, sondern auch funktional in mehrere Einheiten bzw. Baugruppen unterteilt, die sich dann räumlich getrennt anordnen lassen. Dabei enthält die Hochfrequenzeinheit die für das Senden und Empfangen von Mikrowellen relevanten Baugruppen, während die Verarbeitungseinheit die übrigen Baugruppen insbesondere zur Weiterverarbeitung der empfangenen Signale enthält. Die räumliche Trennung von Hochfrequenzsendeeinheit und Hochfrequenzempfangseinheit verhindert des Weiteren ein ungewolltes Übersprechen.

Eine besonders platzsparende Installation lässt sich dadurch erreichen, dass bevorzugt die Mikrowellenmesseinrichtung zwei voneinander beabstandete Hochfrequenzeinheiten aufweist, von denen die eine Hochfrequenzeinheit eine Hochfrequenzsendeeinheit und die andere Hochfrequenzeinheit eine Hochfrequenzempfangseinheit ist. Bei dieser bevorzugten Ausführung finden somit die Einkopplung und die Auskopplung an getrennten Stellen statt, wobei das Mikrowellenfeld den Durchbruch durchsetzt.

Bevorzugt ist die mindestens eine Hochfrequenzeinheit an mindestens einer Stirnseite des Körpers angeordnet, was eine besonders geschickte Anordnung für eine platzsparende Installation der Messvorrichtung darstellt, insbesondere wenn die mindestens eine Hochfrequenzeinheit als Schaltplatine mit darauf niedrigbauenden Bauelementen wie insbesondere SMD-Bauelementen gestaltet ist. Dies gilt besonders auch für eine Weiterbildung dieser Ausführung, bei der eine Hochfrequenzsendeeinheit an der einen Stirnseite des Körpers und eine Hochfrequenzempfangseinheit an der anderen Stirnseite des Körpers angeordnet ist, so dass die Ein- und Auskopplung auf diagonal gegenüberliegenden Seiten stattfindet. Ferner ist bei dieser Weiterbildung die Verarbeitungseinheit kaskadiert zwischen der Hochfrequenzsendeeinheit und der Hochfrequenzempfangseinheit angeordnet.

Eine Weiterbildung dieser Ausführung, bei welcher der Körper einen ersten Körperabschnitt, einen zweiten Körperabschnitt und einen dritten Körperabschnitt aufweist und der Durchbruch an seiner einen Seite vom ersten Körperabschnitt und an seiner gegenüberliegenden anderen Seite vom zweiten Körperabschnitt sowie an seiner in der Einbaustellung der Messvorrichtung oberen Seite vom dritten Körperabschnitt begrenzt ist, so dass der dritte Körperabschnitt den ersten Körperabschnitt und den zweiten Körperabschnitt miteinander verbindet und der erste Körperabschnitt und der zweite Körperabschnitt jeweils einen freien Schenkel bilden, ist dadurch gekennzeichnet, dass die mindestens eine Hochfrequenzeinheit mit mindestens einem Abschnitt an mindestens einem der ersten und zweiten Körperabschnitte angeordnet ist.

Ebenfalls besonders platzsparend ist eine bevorzugte Anordnung der Verarbeitungseinheit in der Einbaustellung oberhalb des Durchbruches und somit oberhalb des Resonators.

Bei einer Weiterbildung dieser Ausführung ist beabstandet vom Durchbruch innerhalb des Körpers ein Hohlraum ausgebildet, der die Verarbeitungseinheit aufnimmt und bevorzugt oberhalb des Durchbruches im Körper ausgebildet ist, so dass auf diese Weise der verbleibende Raum außerhalb des Durchbruches geschickt ausgenutzt wird. Ferner erfährt die Verarbeitungseinheit durch die Anordnung innerhalb des Hohlraumes einen erhöhten Schutz.

Bei einer weiteren bevorzugten Weiterbildung ist in mindestens einer der beiden Stirnseiten eine mit dem Hohlraum kommunizierende Öffnung vorgesehen, durch die sich die Verarbeitungseinheit besonders einfach in den Körper einsetzen lässt.

Des Weiteren kann hier mindestens eine Hochfrequenzeinheit konstruktiv bevorzugt so ausgestaltet sein, dass sie bei Anordnung an einer Stirnseite des Körpers die mit dem Hohlraum kommunizierende Öffnung zumindest teilweise verschließt, wodurch die im Hohlraum angeordnete Verarbeitungseinheit einen besseren Schutz erfährt, ohne dass die Verwendung von Deckeln o. dgl. erforderlich würde.

Für eine einfache und schnelle elektrische Verbindung zwischen der mindestens einen Hochfrequenzeinheit und der Verarbeitungseinheit weist bevorzugt die mindestens eine Hochfrequenzeinheit mindestens ein elektrisches Verbindungsmittel einer ersten Art und die Verarbeitungseinheit mindestens ein elektrisches Verbindungsmittel einer zweiten Art auf, das bei Anordnung der Hochfrequenzeinheit am und/oder im Körper mit dem elektrischen Verbindungsmittel der ersten Art lösbar oder fest elektrisch verbunden wird.

Zweckmäßigerweise sollte das mindestens eine elektrische Verbindungsmittel der ersten Art an der zur Stirnseite weisenden Seite der mindestens einen Hochfrequenzeinheit vorgesehen und sollten die elektrischen Verbindungsmittel der ersten Art und der zweiten Art im Bereich der zum Hohlraum führenden Öffnung angeordnet sein, so dass die zum Hohlraum führende Öffnung des Weiteren auch in geschickter Weise räumlich für die elektrische Verbindung der mindestens einen Hochfrequenzeinheit mit der Verarbeitungseinheit genutzt werden kann. Des Weiteren hat diese Ausführung den Vorteil, dass bei entsprechender Anordnung und Ausrichtung der elektrischen Verbindungsmittel der ersten Art und der zweiten Art zueinander bereits während der Anbringung der Hochfrequenzeinheit an der Stirnseite des Körpers die elektrischen Verbindungsmittel der ersten Art und der zweiten Art miteinander in Kontakt gelangen, wodurch während der Montage ein Arbeitsschritt eingespart wird.

Vorzugsweise enthält der Körper mindestens eine in beide Stirnseiten mündende Durchführung, durch die mindestens ein, insbesondere als koaxial ausgebildetes, Kabel verlegt ist. Im Falle der Ausbildung eines Hohlraumes zur Aufnahme der Verarbeitungseinheit im Körper kann bevorzugt diese Durchführung als zum Hohlraum offene Nut ausgebildet sein, in die das mindestens eine Kabel einfach nur eingelegt zu werden braucht. Das mindestens eine, in der Durchführung verlegte Kabel kann beispielsweise an die Hochfrequenzsendeeinheit und/oder an die Hochfrequenzempfangseinheit angeschlossen sein. Dabei kann ein solches Kabel an einen eine Trägerfrequenz erzeugenden lokalen Oszillator angeschlossen sein, so dass es sich bei einem derartigen Kabel um ein sog. LO-Kabel handelt. Auch wenn die Hochfrequenzsendeeinheit und die Hochfrequenzempfangseinheit räumlich getrennt voneinander und insbesondere an den gegenüberliegenden Stirnseiten des Körpers und somit des Resonators angeordnet sind, benötigen sie für die Frequenzumsetzung denselben lokalen Oszillator, so dass nur ein einziger lokaler Oszillator erforderlich ist. Der lokale Oszillator kann wahlweise in der Hochfrequenzsendeeinheit oder in der Hochfrequenzempfangseinheit oder separat von der Hochfrequenzsendeeinheit und der Hochfrequenzempfangseinheit vorgesehen sein. Als LO-Kabel kann bevorzugt ein Mikro-SMA-Kabel verwendet werden.

Eine weitere bevorzugte Ausführung der Erfindung zeichnet sich dadurch aus, dass die Mikrowellenmesseinrichtung mindestens zwei Antennen aufweist, von denen die eine Antenne eine Sendeantenne und die andere Antenne eine Empfangsantenne ist, und die beiden Antennen in einem solchen Abstand voneinander angeordnet sind, dass die eine Antenne benachbart zu der einen Seite des Durchbruches durch eine im Körper ausgebildete Öffnung in den Resonatorhohlraum und die andere Antenne benachbart zu der gegenüberliegenden anderen Seite des Durchbruches durch eine im Körper ausgebildete Öffnung in den Resonatorhohlraum ragt. Diese Ausführung führt zu einer zum einen besonders platzsparenden und zum anderen besonders effektiven Relativanordnung der beiden Antennen zueinander, so dass die Ein- und Auskopplung in Bezug auf den Durchbruch, der ja in der Einbaustellung der Messvorrichtung mit dem Hohlraum des Strangführungskanals fluchtet, auf gegenüberliegenden Seiten und somit besonders effektiv stattfindet.

Sofern nur eine einzige Hochfrequenzeinheit verwendet wird, kann diese bevorzugt gemeinsam eine Sendeantenne und eine Empfangsantenne aufweisen.

Wenn alternativ getrennt eine Hochfrequenzsendeeinheit und eine Hochfrequenzempfangseinheit verwendet werden, so sind die Hochfrequenzsendeeinheit mit mindestens einer Sendeantenne und die Hochfrequenzempfangseinheit mit mindestens einer Empfangsantenne versehen.

Ferner ist es besonders zweckmäßig, die Antennen im Wesentlichen parallel zueinander zu orientieren und/oder im Wesentlichen auf gleicher Höhe anzuordnen.

Des Weiteren sollten die Antennen im Bereich ihres freien Endes mit elektrischer Masse kurzgeschlossen sein. Da somit die Antennen im Resonator kurzgeschlossen sind und die Ein- und Auskopplung induktiv ist, wird das in Strangrichtung verlaufende elektrische Feld im Wesentlichen ausgeblendet, so dass im Wesentlichen nur das quer zur Strangrichtung verlaufende Magnetfeld wirksam bleibt.

Hierzu kann der Körper zumindest im Bereich seiner Oberfläche aus elektrisch leitendem und die elektrische Masse bildendem Material bestehen und das freie Ende der Antennen mit dem elektrisch leitenden Material elektrisch verbunden sein. Als elektrisch leitendes Material bietet sich insbesondere Metall an.

Zweckmäßigerweise ist die eine Antenne im Bereich des ersten Körperabschnittes und ist die andere Antenne im Bereich des zweiten Körperabschnittes angeordnet.

Innerhalb des Körpers wird bevorzugt der Resonatorhohlraum von einer winklig, vorzugsweise etwa rechtwinklig, gegenüber den Stirnseiten orientierten Innenwand begrenzt. Die gesamte Innenwand des Resonatorhohlraumes sollte einen stetigen Verlauf haben.

Bevorzugt ist der Resonatorhohlraum innerhalb des Körpers im Bereich der ersten bis dritten Körperabschnitte und insbesondere gemeinsam innerhalb aller dieser drei Körperabschnitte ausgebildet.

Eine bevorzugte Weiterbildung dieser Ausführung zeichnet sich dadurch aus, dass innerhalb des ersten Körperabschnittes und/oder innerhalb des zweiten Körperabschnittes der zu der Antenne benachbarte Abschnitt der Innenwand des Resonatorhohlraumes in Richtung auf die Antenne vorspringt und somit einen in Richtung auf die Antenne vorspringenden Abschnitt bildet. Dadurch wird die Fläche des magnetischen Durchflusses und somit die Kopplung geringer, was wiederum zu einer höheren Güte führt. Dabei sollte zweckmäßigerweise der vorspringende Abschnitt einen stetigen Verlauf aufweisen und der Übergang zwischen dem vorspringenden Abschnitt und den angrenzenden Abschnitten der Innenwand des Resonatorhohlraumes ebenfalls stetig sein.

Eine weitere bevorzugte Ausführung, bei welcher der Körper einen ersten Körperabschnitt, einen zweiten Körperabschnitt und einen dritten Körperabschnitt aufweist und der Durchbruch an seiner einen Seite vom ersten Körperabschnitt und an seiner gegenüberliegenden anderen Seite vom zweiten Körperabschnitt sowie an seiner in der Einbaustellung der Messvorrichtung oberen Seite vom dritten Körperabschnitt begrenzt ist, so dass der dritte Körperabschnitt den ersten Körperabschnitt und den zweiten Körperabschnitt miteinander verbindet und jeweils der erste Körperabschnitt und der zweite Körperabschnitt einen freien Schenkel bilden und einen benachbart zum offenen Bereich des Durchbruches befindliches, in der Einbaustellung der Messvorrichtung einen Teil einer Unterseite des Körper bildendes, freies Ende aufweisen, ist dadurch gekennzeichnet, dass der offene Bereich des Durchbruches zumindest während des Betriebes der Messvorrichtung durch Anordnung eines Führungselementes gleichzeitig am freien Ende des ersten Körperabschnittes und am freien Ende des zweiten Körperabschnittes verschließbar ist und der Resonatorhohlraum einen ersten Abschnitt, einen zweiten Abschnitt, einen dritten Abschnitt und einen vierten Abschnitt aufweist, von denen der erste Abschnitt im ersten Körperabschnitt ausgebildet und an dessen freiem Ende nach außen offen ist, der zweite Abschnitt im zweiten Körperabschnitt ausgebildet und an dessen freiem Ende nach außen offen ist, der dritte Abschnitt im dritten Körperabschnitt ausgebildet ist und im Führungselement der vierte Abschnitt ausgebildet ist, der bei Anordnung des Führungselementes an den freien Enden der ersten und zweiten Körperabschnitte, mit dem ersten Abschnitt und dem zweiten Abschnitt des Resonatorhohlraumes steht. Bei größeren Materialmengen und insbesondere Tabakmengen kann es vorkommen, dass der Strangführungskanal und somit auch der Durchbruch im Wesentlichen komplett ausgefüllt wird. In einem solchen Fall kann das elektrische Feld in der Einbaustellung der Messvorrichtung nach unten hin abnehmen, so dass es dann zu einer Sättigung des Messsignals kommen kann und dadurch Änderungen in der Materialmenge nur noch unzureichend gemessen werden können. Mit Hilfe dieser Ausführung wird der Resonatorhohlraum und somit der eigentliche Resonator nach unten hin, bevorzugt im Wesentlichen vollständig, geöffnet und in dem darunter anzuordnenden Führungselement, das vorzugsweise als Klotz ausgebildet sein kann, ein zusätzlicher Resonatorhohlraumabschnitt geschaffen. Der so insgesamt entstehende Resonatorhohlraum erstreckt sich dadurch über zwei separate Bauteile, nämlich mit seinen ersten bis dritten Abschnitten durch den Körper und mit seinem vierten Abschnitt durch das darunterliegende Führungselement, das den Durchbruch an seinem unteren offenen Bereich verschließt. Mit Hilfe einer solchen bevorzugten Konstruktion wird die Möglichkeit geschaffen, das Messfenster insbesondere nach unten hin zu vergrößern.

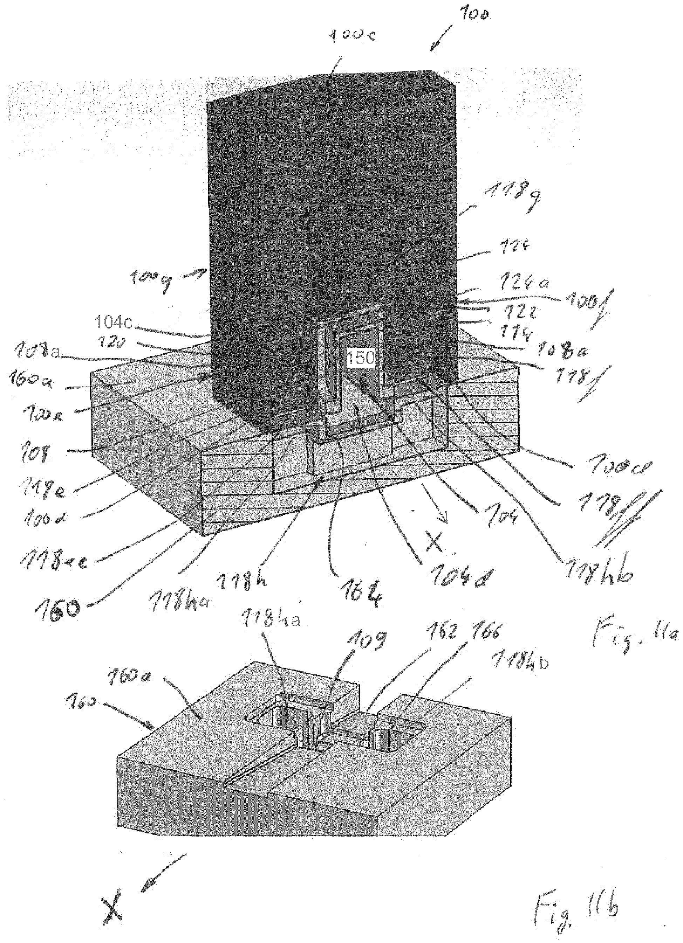

Bei größeren Tabakmengen kann es nämlich vorkommen, dass der Strangführungskanal und somit auch der Durchbruch im Wesentlichen komplett ausgefüllt wird. In einem solchen Fall kann das elektrische Feld in der Einbaustellung der dargestellten Messvorrichtung nach unten zum offenen Bereich des Durchbruches hin abnehmen, so dass es dann zu einer Sättigung des Messsignals kommen kann und dadurch Änderungen in der Tabakmenge nur noch unzureichend gemessen werden können. Bei dem zuvor anhand der Figuren 11a und 11b erläuterten dritten Ausführungsbeispiel wird der Resonatorhohlraum nach unten hin, bevorzugt im Wesentlichen vollständig, geöffnet und in dem darunter anzuordnenden Einführklotz mit dem vierten Abschnitt des Resonatorhohlraumes ein zusätzlicher Resonatorhohlraumabschnitt geschaffen. Der so insgesamt entstehende, bevorzugt dann ringförmig ausgebildete, Resonatorhohlraum erstreckt sich dadurch über zwei separate Bauteile, nämlich mit seinen ersten bis dritten Abschnitten durch den Resonatorkörper und mit seinem vierten Abschnitt durch den darunterliegenden Einführklotz, das den Durchbruch an seinem unteren offenen Bereich verschließt. Dadurch wird die Möglichkeit geschaffen, das Messfenster durch die Ausbildung des zusätzlichen Messfensters in der Oberseite des Einführklotzes nach unten hin zu vergrößern. Mit einer solchen Konstruktion lässt sich ein resultierendes elektromagnetisches Feld erzeugen, das nun mehr einem geschlossenen Resonator als einem offenen Resonator ähnelt, eine stärkere Homogenität zeigt und eine radiale Abhängigkeit besitzt, indem es zum Zentrum hin schwächer wird. Das Messsignal ist zwar möglicherweise etwas schwächer, jedoch auf jeden Fall deutlich linearer und erlaubt zudem eine größere Aufschüttung der zu messenden Tabakmenge, wobei die Linearität des Messsignals in einer recht konstanten Messempfindlichkeit resultiert.

Bei einer Weiterbildung dieser Ausführung weist das Führungselement an seiner zu dem Körper und dem Durchbruch hin gerichteten, in der Einbaustellung der Messvorrichtung eine Oberseite bildenden Seite ein Messfenster, über das der im Führungselement ausgebildete vierte Abschnitt des Resonatorhohlraumes zum offenen Bereich des Durchbruches hin offen ist, und/oder der im Führungselement ausgebildete vierte Abschnitt des Resonatorhohlraumes zwei Enden aufweist, die an der zu dem Körper und dem Durchbruch hin gerichteten Seite des Führungselementes offen sind und von denen bei Anordnung des Führungselementes an den freien Enden der ersten und zweiten Körperabschnitte das eine Ende des vierten Abschnittes des Resonatorhohlraumes zum freien Ende des ersten Körperabschnittes und das andere Ende des vierten Abschnittes des Resonatorhohlraumes zum freien Ende des zweiten Körperabschnittes ausgerichtet ist, und/oder eine, bevorzugt nuten- oder kanalförmige, zum offenen Bereich des Durchbruches offene Aussparung, die in Bezug auf den offenen Bereich des Durchbruches so ausgerichtet und ausgebildet ist, dass der Körper in der Einbaustellung der Messvorrichtung unter Ausrichtung der Anordnung aus Durchbruch und Aussparung des Führungselementes zum Hohlraum des Strangführungskanals mit einer seiner Stirnseiten an den Strangführungskanal anordbar oder mit seinen beiden Stirnseiten in den Strangführungskanal einpassbar ist, auf.

Des Weiteren kann vorzugsweise der Resonatorhohlraum in Bezug auf eine in Einbaustellung vertikal verlaufende Mittellinie des Durchbruches spiegelsymmetrisch ausgebildet sein, wobei beispielsweise die Mittellinie auch eine Symmetrielinie für den Durchbruch selbst bilden und/oder der Durchbruch einen rechteckigen Querschnitt aufweisen kann.

Um andere elektronische Bauteile und Schaltungsgruppen gegen einen unerwünschten Einfluss der Hochfrequenz zu schützen, sollten bevorzugt die Hochfrequenzeinheiten zumindest teilweise durch ein Hochfrequenzabschirmelement abgeschirmt sein, der vorzugsweise als Deckel ausgebildet sein kann, welcher über die Hochfrequenzeinheit an der Stirnseite des Körpers lösbar angeordnet ist.

Gemäß einem zweiten Aspekt der Messvorrichtung ist mindestens eine einen Abschnitt, einen Teil oder eine Baugruppe der Mikrowellenmesseinrichtung bildende Hochfrequenzeinheit an mindestens einer Stirnseite des Körpers angeordnet, an und/oder in einem einen Halteabschnitt bildenden Abschnitt der mindestens einen Stirnseite des Körpers mindestens ein Verbindungselement einer ersten Art vorgesehen und an und/oder in der mindestens einen Hochfrequenzeinheit mindestens ein zu einem Verbindungselement der ersten Art im Wesentlichen komplementär gestaltetes und in Übereinstimmung mit der Anordnung dieses Verbindungselementes der ersten Art entsprechend angeordneten Verbindungselement der zweiten Art vorgesehen, mit dem bei Anordnung der Hochfrequenzeinheit an der Stirnseite des Körpers das entsprechende Verbindungselement der ersten Art unter gleichzeitiger Befestigung an der Hochfrequenzeinheit in Eingriff gebracht wird. Demnach sind die Verbindungselemente der zweiten Art im Wesentlichen komplementär zu den Verbindungselementen der ersten Art gestaltet, was nicht nur hinsichtlich der Formgebung, sondern auch hinsichtlich der Positionierung und Ausrichtung zueinander gilt; denn nur dann ist ein Eingriff eines Verbindungselementes der ersten Art mit einem zugeordneten Verbindungselement der zweiten Art gewährleistet. Die erfindungsgemäße Verwendung von derartigen Verbindungselementen ermöglicht eine besonders einfache und zugleich sichere Befestigung der mindestens einen Hochfrequenzeinheit an einer Stirnseite des Körpers. Eine solche Befestigung lässt sich ggf. auch wieder lösen, was bei einer Verklebung nicht möglich ist. In diesem Zusammenhang sei der guten Vollständigkeit halber darauf hingewiesen, dass dieser zweite Aspekt der Erfindung alternativ auch eine bevorzugte Weiterbildung des zuvor beschriebenen ersten Aspektes der Erfindung bilden kann.

Bevorzugt können die zuvor genannten Verbindungselemente als elektrische Verbindungselemente vorgesehen sein, wozu sie dann elektrisch leitendes Material aufweisen.

Dabei kann vorzugsweise die Befestigung des mindestens einen Verbindungselementes der ersten Art an der Hochfrequenzeinheit durch Löten erfolgen, wodurch eine besonders einfach zu realisierende und zugleich zuverlässige Verbindung gleichermaßen elektrischer wie auch mechanischer Art geschaffen wird.

Des Weiteren besteht bevorzugt das mindestens eine Verbindungselement der ersten Art zumindest an seiner Oberfläche aus elektrisch leitendem und die elektrische Masse bildendem Material und ist mit einem an der Hochfrequenzeinheit ausgebildeten Masseleiter elektrisch gekoppelt. Zusätzlich kann zumindest der Halteabschnitt an bzw. in der Stirnseite des Körpers aus elektrisch leitendem und die elektrische Masse bildendem Material bestehen, mit dem das mindestens eine Verbindungselement der ersten Art elektrisch verbunden ist. Demnach sorgen die Eingriffsmittel zugleich für eine effektive Massekopplung.

Bei einer weiteren bevorzugten Ausführung ist im Körper eine erste Durchgangsöffnung ausgebildet, die zur Stirnseite hin im Halteabschnitt benachbart zu dem mindestens einen Verbindungselement der ersten Art offen ist und durch die eine Antenne geführt ist, und enthält die Hochfrequenzeinheit benachbart zu dem mindestens einen Verbindungselement der zweiten Art eine zweite Durchgangsöffnung, durch die die Antenne bei Anordnung der Hochfrequenzeinheit an der Stirnseite des Körpers ragt, wobei die Antenne an der Hochfrequenzeinheit angeschlossen ist. Somit findet im Zusammenwirken mit den Verbindungselementen, insbesondere wenn diese zusätzlich eine Masseverbindung bewirken, eine bessere Ankopplung der Antenne an die zugehörige Hochfrequenzeinheit und insbesondere deren von der Stirnseite des Körpers abgewandten Seite statt.

Bei einer Weiterbildung dieser Ausführung besitzt das mindestens eine Verbindungselement der ersten Art eine gekrümmte Form, so dass es die erste Durchgangsöffnung in der Stirnseite des Körpers zumindest teilweise umgibt, und besitzt in gleicher Weise und gleicher Ausrichtung das mindestens eine Verbindungselement der zweiten Art eine im Wesentlichen identisch gekrümmte Form, so dass es die zweite Durchgangsöffnung in der Hochfrequenzeinheit in gleicher Weise zumindest teilweise umgibt. Vorzugsweise bildet die gekrümmte Form einen Teilkreisbogen, dessen Mittelpunkt in der ersten bzw. zweiten Durchgangsöffnung, bevorzugt in deren Mitte, liegt.

Bevorzugt können mehrere Verbindungselemente der ersten Art um die erste Durchgangsöffnung herum und entsprechend dieser Anordnung eine entsprechende Anzahl von Verbindungselementen der zweiten Art um die zweite Durchgangsöffnung herum verteilt angeordnet sein. Somit bilden die Verbindungselemente zusammen mit der durch die Durchgangsöffnungen geführten Antenne gemeinsam eine quasi-koaxiale Leitung. Zweckmäßigerweise sollten die Verbindungselemente der ersten Art und die Verbindungselemente der zweiten Art jeweils äquidistant zueinander angeordnet sein. Ebenfalls zweckmäßigerweise sollten die Verbindungselemente der ersten Art und die Verbindungselemente der zweiten Art jeweils auf einem im Wesentlichen identischen Kreis angeordnet sein, dessen Mittelpunkt in der ersten bzw. zweiten Durchgangsöffnung, vorzugsweise in deren Mitte, liegt.

Eine weitere Ausführung der Messvorrichtung zeichnet sich dadurch aus, dass das mindestens eine Verbindungselement der einen Art als vorspringendes oder abstehendes Element und das mindestens eine Verbindungselement der anderen Art als Aussparung oder Öffnung ausgebildet ist, in die bei Anordnung der Hochfrequenzeinheit an der Stirnseite des Körpers ein Verbindungselement der einen Art eingreift. Bei einer Weiterbildung dieser Ausführung ist das mindestens eine Verbindungselement der einen Art als Stift ausgebildet, der bevorzugt rechtwinklig zur Stirnseite des Körpers orientiert ist, während in komplementärer Weise das mindestens eine Verbindungselement der anderen Art als Loch oder Durchgangsloch bzw. Via zur Aufnahme des Stiftes ausgebildet ist.

Vorzugsweise ist das mindestens eine Verbindungselement der einen Art ein Verbindungselement der ersten Art und das mindestens eine Verbindungselement der anderen Art ein Verbindungselement der zweiten Art. Bei einer Weiterbildung dieser Ausführung weist das mindestens eine Verbindungselement der zweiten Art in der Hochfrequenzeinheit eine Durchgangsöffnung auf, durch die sich ein Verbindungselement der ersten Art erstreckt, wobei die Befestigung dieses Verbindungselementes der ersten Art an einer von der Stirnseite des Körpers abgewandten Seite der Hochfrequenzeinheit vorgesehen ist.

Bei einer weiteren bevorzugten Ausbildung kann der Halteabschnitt ein vom Körper separates Bauteil bilden und in der Stirnseite des Körpers eine Aussparung ausgebildet sein, in die der Halteabschnitt einsetzbar ist. Mit einer solchen Konstruktion ist es beispielsweise möglich, den Körper im kostengünstigen Gussverfahren und nur den für den Hochfrequenzübergang vorgesehenen Halteabschnitt mit Hilfe des verhältnismäßig kostenintensiven dreidimensionalen Druckverfahrens herzustellen. Der Halteabschnitt kann in der Aussparung beispielsweise durch Verkleben oder Einschrumpfen befestigt werden.

Gemäß einem dritten Aspekt der Messvorrichtung ist der Durchbruch mit einer abriebfesten, elektrisch nicht leitenden und im Wesentlichen verlustarmen dielektischen Einlage versehen. Mit einer solchen Konstruktion wird der Körper im Bereich seines Durchbruches vor erhöhtem Verschleiß aufgrund der durch das vorbeibewegte Material erzeugten Reibung geschützt. In diesem Zusammenhang sei der guten Vollständigkeit halber angemerkt, dass dieser dritte Aspekt der Erfindung alternativ auch eine bevorzugte Weiterbildung des zuvor beschriebenen ersten Aspektes und/oder des zuvor beschriebenen zweiten Aspektes der Erfindung bilden kann.

In Abhängigkeit von den gewählten Abmessungen des Strangführungskanals und des Trimmerwangenpaketes ist die Einlage entsprechend anzupassen. Gleiches gilt auch für das gewählte Material, insbesondere bei Verwendung verschiedener Kanalweiten.

Vorzugsweise weist das Material der Einlage Keramikmaterial, insbesondere Al₂O₃-ZrO₂, und/oder Quarz-Glas auf.

Zweckmäßigerweise sollte die Einlage als auswechselbarer Einsatz ausgebildet sein. Somit kann die Einlage auch in geschickter Weise zur Anpassung des Durchbruches an die individuellen Abmessungen des jeweils verwendeten Strangführungskanals angepasst werden, indem verschiedene Einlagen mit entsprechend unterschiedlichen Querschnittsformen und -abmessungen als auswechselbare Einsätze vorgehalten werden.

Durch die Einlage wird auch das Messfenster des Resonators bedeckt und somit vor eventuellen Verschleiß durch das vorbeibewegte Material geschützt. Um an dieser Stelle die dielektrischen Einflüsse möglichst gering zu halten, sollte die Dicke der Einlage im Bereich des Messfensters verringert sein. Dies kann beispielsweise dadurch realisiert werden, dass die Einlage im Bereich des Messfensters eine Ausnehmung geringerer Dicke aufweist. Für den Fall, dass verschiedene Einlagen mit entsprechend unterschiedlichen Querschnittsformen und -abmessungen als auswechselbare Einsätze vorgehalten werden, sollte vorzugsweise die Dicke der Ausnehmung bei allen diesen verschiedenen Einlagen gleich sein, um im Bereich des Messfensters gleiche dielektische Eigenschaften zu gewährleisten. Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend anhand von Ausführungsbeispielen unter Bezugnahme auf die Zeichnungen beschrieben. Eszeigen:
- Fig. 1: ein schematisches Übersichtsbild einer bekannten Zigarettenstrangmaschine,
- Fig. 2: schematisch eine perspektivische Einzeldarstellung (a) und eine Querschnittsdarstellung (b) eines in der bekannten Zigarettenstrangmaschine von Fig. 1 vorgesehenen Strangführungskanals,
- Fig. 3: in einer ersten perspektivischen Ansicht den Resonatorkörper einer Messvorrichtung ohne elektronische Baugruppen gemäß einer ersten bevorzugten Ausführung,
- Fig. 4: in der gleichen perspektivischen Ansicht wie Fig. 3 einen durch einen vorderen Querschnitt und einen hinteren Querschnitt aus der Mitte des Resonatorkörpers von Fig. 3 herausgeschnittenen mittleren Abschnitt,
- Fig. 5: in einer gegenüber Fig. 3 entgegengesetzten perspektivischen Ansicht den Resonatorkörper der Messvorrichtung ohne Elektronik gemäß einer zweiten bevorzugten Ausführung mit einem abgenommenen Stifthalter,
- Fig. 6: den Resonatorkörper von Fig. 5 in einer gegenüber Fig. 5 anderen perspektivischen Ansicht mit eingesetztem Stifthalter,
- Fig. 7: in perspektivischer auseinandergezogener Ansicht die für die Anordnung im und am Resonatorkörper vorgesehenen elektronischen Baugruppen,
- Fig. 8: in perspektivischer Ansicht die elektronischen Baugruppen von Fig. 7 in ihrer relativen Positionierung zueinander bei Anordnung am und im Resonatorkörper ohne Darstellung des Resonatorkörpers,
- Fig. 9: eine perspektivische Ansicht der Messvorrichtung im komplett zusammengebauten Zustand,
- Fig. 10: in perspektivischer Ansicht ein Keramikeinsatz gemäß einer bevorzugten Ausführung, und
- Fig. 11: in einer zu den Figuren 3 und 4 ähnlichen perspektivischen Ansicht den Resonoatorkörper einer Messvorrichtung ohne elektronische Baugruppen gemäß einer dritten bevorzugten Ausführung zusätzlich mit einem als Führungselement vorgesehenen Einführklotz (a) sowie in einer perspektivischen Einzelansicht den Einführklotz (b).

In den Zeichnungen sind jeweils gleiche oder gleichartige Elemente und/oder Teile mit denselben Bezugsziffern versehen, so dass von einer erneuten Vorstellung jeweils abgesehen wird.

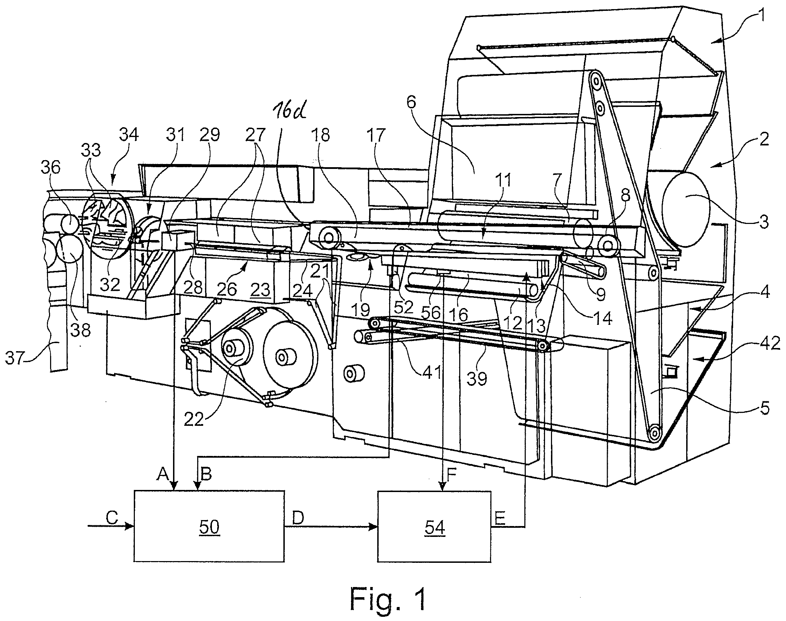

In Fig. 1 ist schematisch eine bekannte Zigarettenstrangmaschine gemäß DE 10 2011 082 625 A 1 gezeigt, deren Aufbau und Wirkungsweise nachfolgend erläutert wird.

Von einer Schleuse 1 wird ein Vorverteiler 2 portionsweise mit (in den Figuren nicht gezeigten) Tabakfasern beschickt. Eine Entnahmewalze 3 im Vorverteiler 2 versorgt einen Vorratsbehälter 4 mit Tabakfasern aus dem Vorverteiler 2. Aus dem Vorratsbehälter 4 entnimmt ein Steilförderer 5 die Tabakfasern und beschickt einen Stauschacht 6. Aus dem Stauschacht 6 entnimmt eine Stiftwalze 7 einen im Wesentlichen gleichförmigen Tabakfaserstrom, der von einer Ausschlagwalze 8 aus den Stiften der Stiftwalze 7 herausgeschlagen und auf ein mit konstanter Geschwindigkeit umlaufendes Streutuch 9 geschleudert wird. Auf dem Streutuch 9 wird aus dem Tabakstrom ein Tabakvlies gebildet. Das Tabakvlies wird in eine Sichteinrichtung 11 geschleudert, die im Wesentlichen aus einem Luftvorhang besteht, den größere bzw. schwerere Tabakteile passieren, während alle anderen Tabakteilchen von der Luft in einen von einer Stiftwalze 12 und einer Wand 13 gebildeten Trichter 14 gesenkt werden.

Von der Stiftwalze 12 werden die Tabakfasern aus dem Trichter 12 eines nicht näher gekennzeichneten Saugbandförderers in einen Strangführungskanal 16 und dort gegen einen den Boden des Strangführungskanals 16 bildenden Untertrum eines luftdurchlässigen, von seiner Rückseite her mit Unterdruck beaufschlagten, endlos umlaufenden Saugbandes 17 geschleudert, an dem aus den Tabakfasern ein strangförmiger Tabakfaserkuchen aufgeschauert wird, der somit am Untertrum des Saugbandes 17 mithilfe von in eine Unterdruckkammer 18 gesaugter Luft gehalten wird. Durch das umlaufende Saugband 17 wird entlang des Strangführungskanals 16 der darin aufgeschauerte bzw. angesammelte Tabakfaserkuchen als Strang hängend gefördert. Der Untertrum des Saugbandes 17 erstreckt sich durch den Strangführungskanal 16 von dessen Anfang, wo sich die Strangbildungszone befindet, im dargestellten Ausführungsbeispiel bis zu einem Egalisator oder Trimmer 19 zur Entfernung von überschüssigen Tabakfasern.

Anschließend wird der so gebildete Tabakfaserstrang auf einen im Gleichlauf geführten Zigarettenpapierstreifen 21 gelegt. Der Zigarettenpapierstreifen 21 wird von einer Bobine 22 abgezogen, durch ein Druckwerk 23 geführt und auf ein angetriebenes Formatband 24 gelegt. Das Formatband 24 transportiert den Tabakstrang gemeinsam mit dem Zigarettenpapierstreifen 21 durch ein Format 26, in dem der Zigarettenpapierstreifen 21 um den Tabakstrang gefaltet wird, so dass nur noch ein schmaler Rand absteht, der von einem nicht dargestellten Leimapparat in bekannter Weise beleimt wird. Die so gebildete Klebenaht wird dann geschlossen und von einer Tandemnahtplätte 27 getrocknet.

Der so gebildete Zigarettenstrang 28 durchläuft ein Messgerät 29 und wird anschließend von einem Messerapparat 31 in doppelt lange Zigaretten 32 geschnitten. Die doppelt langen Zigaretten 32 werden von einer gesteuerte Arme aufweisenden Übergabevorrichtung 34 auf eine Übernahmetrommel 36 einer Filteransetzmaschine 37 übergeben, auf deren Schneidtrommel 38 sie mit einem Kreismesser in Einzelzigaretten geteilt werden.

Förderbänder 39, 41 fördern vom Trimmer 19 abgetrennte überschüssige Tabakfasern in einen unter dem Vorratsbehälter 4 angeordneten Behälter 42, aus dem diese überschüssigen Tabakfasern als rückgeführter Tabak vom Steilförderer 5 wieder entnommen wird.

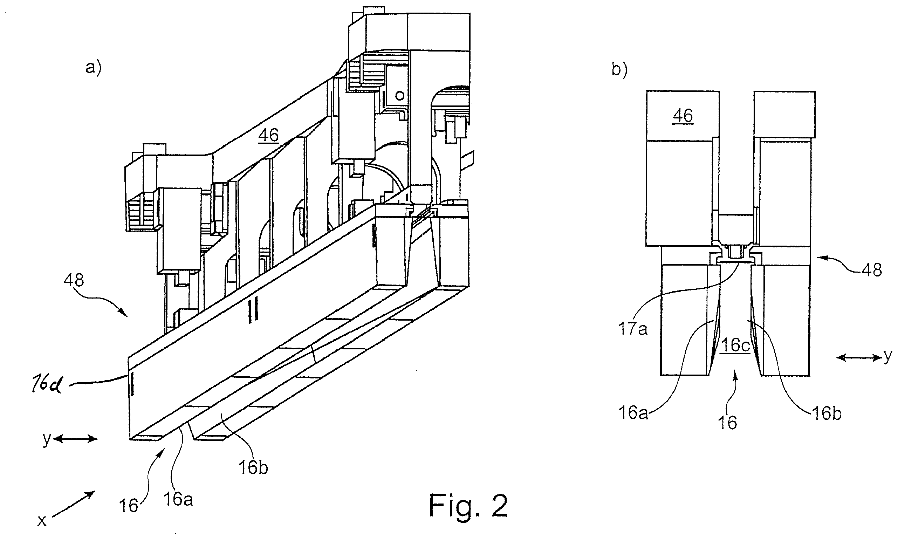

In den Fig. 2a und 2b ist der Strangführungskanal 16 als Einzelheit mit weiteren Details dargestellt.

Die den Strangführungskanal 16 umfassende Baugruppe weist einen Rahmen 46 auf, durch den diese Baugruppe in der in Fig. 1 gezeigten Maschine angeordnet ist. Der Strangführungskanal 16 ist nach unten offen und weist zwei voneinander beabstandete seitliche Wangen 16a, 16b auf. Ferner ist in Fig. 2b der den (oben liegenden) Boden des Strangführungskanals 16 bildende Untertrum 17a des endlos umlaufenden Saugbandes 17 (Fig. 1) schematisch im Querschnitt dargestellt. Der Hohlraum 16c und somit auch der Querschnitt des Strangführungskanals 16 wird von den beiden seitlichen Kanalwangen 16a, 16b und dem Untertrum 17a des Saugbandes 17 begrenzt. Der Abstand zwischen den beiden seitlichen Kanalwangen 16a, 16b des Strangführungskanals 16 bestimmt die Breite des im Hohlraum 16c des Strangführungskanals 16 aufgeschauerten strangförmigen Tabakkuchens.

Im dargestellten Beispiel ist mindestens eine der beiden seitlichen Wangen 16a, 16b quer zur Strangförderrichtung gemäß dem in Fig. 2a gezeigten Pfeil X verstellbar, was in den Fig. 2a und 2b mit dem Doppelpfeil Y schematisch angedeutet ist. Durch diese Verstellbarkeit mindestens einer der beiden seitlichen Wangen 16a, 16b lässt sich deren Abstand voneinander und somit die lichte Breite des Hohlraumes 16c des Strangführungskanals 16 verändern, was auch eine entsprechende Veränderung der Breite des im Hohlraum 16c des Strangführungskanals 16 aufgeschauerten strangförmigen Tabakkuchens bewirkt. Bei gegebener Querschnittsfläche des im Hohlraum 16c des Strangführungskanals 16 aufgeschauerten strangförmigen Tabakkuchens hat die Veränderung der Breite auch einen Einfluss auf die Aufschütthöhe.

Die Verstellung der seitlichen Wangen 16a, 16b erfolgt mithilfe einer Antriebseinrichtung 48, die von einer nachfolgenden Regelung angesteuert wird, bei welcher der Abstand zwischen den beiden Kanalwangen 16a, 16b bzw. die lichte Breite des Hohlraumes 16c des Strangführungskanals 16 die Stellgröße bildet.

Das in Fig. 1 dargestellte Messgerät 29 ist im Stand der Technik vorgesehen, nicht nur den Querschnitt und die Ovalität bzw. Rundheit, sondern auch die Dichte des Zigarettenstranges 28 und/oder das Gewicht der Zigaretten 32 und/oder das Gewicht des Zigarettenstranges 28 pro Längeneinheit und/oder den Faserfüllgrad im Zigarettenstrang 28 und/oder in den Zigaretten 32 zu erfassen und ein entsprechendes Ausgangssignal A abzugeben. Dieses Ausgangssignal A wird an einen Regler 50 übermittelt. Wie Fig. 1 schematisch erkennen lässt, ist am Strangführungskanal 16 ein Abstandssensor 52 vorgesehen, der die Aufschütthöhe des strangförmigen Tabakkuchens im Strangführungskanal 16 erfasst und ein entsprechendes Ausgangssignal B an den Regler 50 übermittelt. Der Abstandssensor 52 ist stromaufwärts vor dem Trimmer 19 angeordnet.

Am Strangführungskanal 16 ist noch ein weiterer Abstandssensor 56 vorgesehen, mit dessen Hilfe der jeweilige Ist-Wert für den lichten Abstand zwischen den beiden seitlichen Wangen 16a, 16b des Strangführungskanals 16 und somit die Breite dessen Hohlraums 16c erfasst und ein entsprechendes Signal F an eine Justiereinrichtung 54 übermittelt wird. Der Regler 50 verarbeitet als weitere Eingangsgröße ein Sollwert-Signal C, durch das für den oder die zu regelnden Parameter ein entsprechender Sollwert vorgegeben wird. Diese drei Signale A, B und C werden im Regler 50 verarbeitet, der als Ergebnis ein Ausgangssignal D produziert, um die nachgeschaltete Justiereinrichtung 54 entsprechend anzusteuern. Die Justiereinrichtung 54 erzeugt als Ausgangssignal ein Steuersignal E, durch das die Einstellung des Saugbandförderers beeinflussende Stellantriebe wie beispielsweise die Antriebseinrichtung 48 zur Verstellung der seitlichen Wangen 16a, 16b des Strangführungskanals 16 entsprechend gesteuert werden.

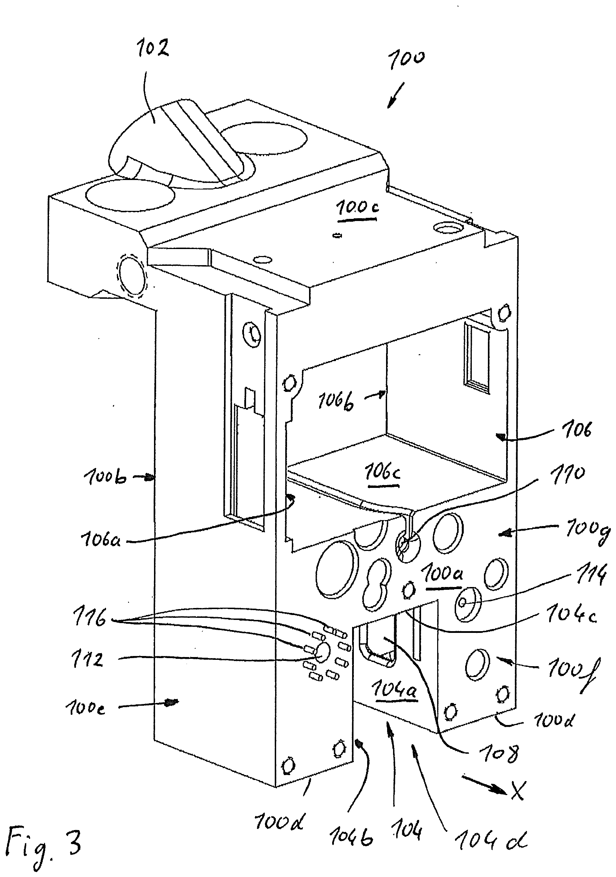

Im Gegensatz zu dem zuvor erörterten Stand der Technik findet mit der nachfolgend beschriebenen Messvorrichtung die Messung der Dichte und/oder des Gewichtes und/oder des Faserfüllgrades nicht mehr in dem Messgerät 29 statt, sondern im Bereich des Saugbandförderers, wo der Tabakstrang noch nicht durch ein Umhüllungsmaterial umhüllt ist. Somit werden störende Einflüsse des Umhüllungsmaterials auf die Messung vermieden. Denn bei Verwendung einer Mikrowellenmesseinrichtung kann das Umhüllungsmaterial schlimmstenfalls die Messung völlig unmöglich machen, wenn das Umhüllungsmaterial aus einer Metallfolie besteht, wie sie zur Herstellung von "Heat-Not-Burn"-Rauchprodukten verwendet wird. Deshalb ist gerade für die Herstellung von "Heat-Not-Burn"-Rauchprodukten die Verlegung der Messung von Dichte, Gewicht und/oder Faserfüllgrad von dem stromabwärts von dem Format 26 sitzenden Messgerät 29 zu dem stromaufwärts vor dem Format 26 befindlichen Saugbandförderer von unschätzbarem Vorteil. Somit verbleibt dem Messgerät 29 nur die Messung des Querschnittes und der Ovalität bzw. Rundheit des Zigarettenstranges 28. Für die Messung der Dichte des im Saugbandförderer gebildeten Tabakstranges und/oder dessen Gewichtes pro Längeneinheit und/oder dessen Faserfüllgrades kommt eine separate Messvorrichtung zum Einsatz, wie nachfolgend anhand der Figuren 3 bis 10 näher beschrieben wird. Diese Messvorrichtung weist eine Mikrowellenmesseinrichtung auf und wird stromabwärts von dem Egalisator oder Trimmer 19 in den Strangführungskanal 16 eingesetzt oder an dessen stromabwärts gelegenes Ende 16d (vgl. Fign. 1 und 2a) angeordnet. Das von dieser Messvorrichtung erzeugte Ausgangssignal wird ebenfalls an den in Fig. 1 gezeigten Regler 50 übermittelt und in diesem entsprechend verarbeitet, was in den Figuren jedoch nicht dargestellt ist. Ferner ist zur höhenveränderlichen Einstellung des in Fig. 1 abgebildeten Egalisators oder Trimmers 19 und somit zur veränderlichen Einstellung dessen Abstandes von dem in Fig. 2b erkennbar gezeigten Untertrum 17a des Saugbandes 17 ein in den Figuren nicht dargestellter weiterer Stellantrieb vorgesehen, der zusätzlich von dem Steuersignal E der Justiereinrichtung 54 in Abhängigkeit vom Ausgangssignal D des Reglers 50 entsprechend angesteuert wird.

In Fig. 3 ist gemäß einem ersten bevorzugten Ausführungsbeispiel ein Resonatorkörper 100 abgebildet, der ein Teil der zuvor erwähnten Messvorrichtung bildet und zur Aufnahme der erforderlichen elektronischen Baugruppen dient, welche in Fig. 3 jedoch nicht dargestellt sind, sondern im Einzelnen später beschrieben werden. Der Resonatorkörper 100 weist eine erste Stirnseite 100a, bei der es sich in der Ansicht von Fig. 3 um die dem Betrachter zugewandte vordere Stirnseite handelt, und eine zur ersten Stirnseite 100a entgegengesetzt gelegene zweite Stirnseite 100b auf, die in der Ansicht von Fig. 3 vom Betrachter weggerichtet ist und vom Resonatorkörper 100 verdeckt ist. Fig. 3 zeigt den Resonatorkörper 100 in einer Orientierung, welche der Orientierung im montierten Zustand der Messvorrichtung am oder im Strangführungskanal 16 entspricht, und somit in seiner Einbaustellung. Hiernach sind im dargestellten Ausführungsbeispiel die beiden parallel zueinander verlaufenden Stirnseiten 100a, 100b vertikal angeordnet und rechtwinklig zur Strangförderrichtung gemäß Pfeil X orientiert. Ferner weist der Resonatorkörper 100 eine Oberseite 100c auf, auf der eine tüllenförmige Kabeldurchführung 102 ausgebildet ist. In seinem unteren Bereich ist der Resonatorkörper 100 mit einem Durchbruch 104 versehen, der zur Unterseite 100d des Resonatorkörpers 100 hin offen ist, wie Fig. 3 ferner erkennen lässt. Im dargestellten Ausführungsbeispiel hat der Durchbruch 104 einen rechteckigen Querschnitt und wird von zwei voneinander beabstandeten Seitenwänden 104a, 104b, die rechtwinklig zur Unterseite 100d des Resonatorkörpers 100 und zugleich vertikal orientiert sind, und von einer oberen Wand 104c begrenzt, die die Seitenwände 104a, 104b miteinander verbindet und horizontal orientiert ist, und weist an der Unterseite 100d des Resonatorkörpers 100 einen nach unten offenen Bereich 104d auf. Der Durchbruch 104 erstreckt sich über die gesamte Länge des Resonatorkörpers 100 zwischen dessen Stirnseiten 100a, 100b und ist somit an beiden Stirnseiten 100a, 100b des Resonatorkörpers 100 offen. Im montierten Zustand der Messvorrichtung ist der Durchbruch 104 zum Hohlraum 16c des Strangführungskanals 16 (Fig. 2b) fluchtend ausgerichtet, so dass das Saugband 17 mit seinem Untertrum 17a an der oberen Wand 104c des Durchbruches 104 entlangläuft und der vom Saugband 17 mitgenommene Tabakstrang durch den Durchbruch 104 transportiert wird.

Durch die Ausbildung des Durchbruches 104 lässt sich der Resonatorkörper 100 in einen ersten Körperabschnitt 100e, einen zweiten Körperabschnitt 100f und einen dritten Körperabschnitt 100g unterteilen, wie in Fig. 3 schematisch angedeutet ist, wobei die ersten und zweiten Körperabschnitte 100e, 100f durch den Durchbruch 104 voneinander getrennt sind, an der Unterseite 100d des Resonatorkörpers 100 enden und somit die Form von zwei voneinander beabstandeten Schenkeln haben, während der dritte Körperabschnitt 100g oberhalb des Durchbruches 104 und der ersten und zweiten Körperabschnitte 100e, 100f definiert ist und die ersten und zweiten Körperabschnitte 100e, 100f miteinander verbindet. Wie Fig. 3 ferner erkennen lässt, ist im oberen Körperabschnitt 100g des Resonatorkörpers 100 ein Hohlraum 106 ausgebildet, der sich über die gesamte Länge des Resonatorkörpers 100 zwischen dessen erster Stirnseite 100a und dessen zweiter Stirnseite 100b erstreckt und somit eine erste Öffnung 106a in der ersten Stirnseite 100a des Resonatorkörpers 100 und in der gegenüberliegenden zweiten Stirnseite 100b des Resonatorkörpers 100 eine zweite Öffnung 106b bildet. Somit ist der Hohlraum 106 durch diese beiden Öffnungen 106a, 106b vonseiten der beiden Stirnseiten 100a, 100b des Resonatorkörpers 100 zugänglich.

Wie bereits angesprochen, kommt als Messvorrichtung eine Mikrowellenmesseinrichtung zum Einsatz, deren Bestandteil der Resonatorkörper 100 ist. Ein weiterer Bestandteil der Mikrowellenmesseinrichtung ist ein Resonatorhohlraum 118, der innerhalb des Resonatorkörpers 100 ausgebildet und über ein Messfenster 108 zum Durchbruch 104 hin offen ist; in Fig. 3 ist nur der in der Seitenwand 104a des Durchbruches 104 ausgebildete Abschnitt des Messfensters 108 erkennbar.

Wie Fig. 3 ferner erkennen lässt, ist im Boden 106c des Hohlraumes 106 eine längliche Nut 110 ausgebildet, die sich wie der Hohlraum 106 über die gesamte Länge des Resonatorkörpers 100 zwischen dessen beiden Stirnseiten 100a, 100b erstreckt.

Ferner ist auf Höhe des Durchbruches 104 im ersten Körperabschnitt 100e eine erste Antennendurchgangsbohrung 112 und im zweiten Körperabschnitt 100f eine zweite Antennendurchgangsbohrung 114 ausgebildet, wobei die beiden Antennendurchgangsbohrungen 112, 114 nicht nur auf gleicher Höhe liegen, sondern auch parallel zueinander verlaufen und die gleiche Orientierung wie der Durchbruch 104 haben. Die erste Antennendurchgangsbohrung 112 ist von mehreren Stiften 116 umgeben, die rechtwinklig zur Stirnseite 100a des Resonatorkörpers 100 und in Richtung des Durchbruches 104 orientiert, auf einem Kreis angeordnet, dessen Mittelpunkt mit der Mittelachse der Antennendurchgangsbohrung 112 zusammenfällt, und äquidistant zueinander positioniert sind. Diese Stifte 116 bilden Kontaktpins und dienen als quasi-koaxiale Masseverbindung.

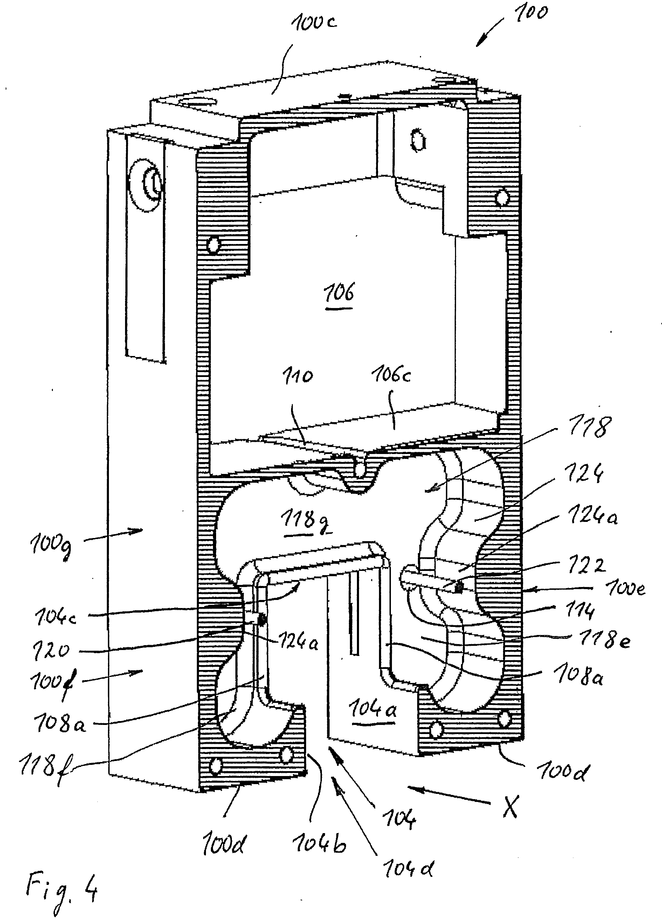

Fig. 4 zeigt den Resonatorkörper 100 von Fig. 3, geschnitten in einer Ebene rechtwinklig zu der Strangförderrichtung gemäß Pfeil X und somit zur Längserstreckung des Durchbruches 104. Dadurch lässt Fig. 4 den Resonatorhohlraum 118 erkennen, der innerhalb des Resonatorkörpers 100 ausgebildet ist und sich durch dessen erste, zweite und dritte Körperabschnitte 100e, 100f und 100g erstreckt. Somit ist im dargestellten Ausführungsbeispiel der Resonatorhohlraum 118 in einen ersten Abschnitt 118e, einen zweiten Abschnitt 118f und einen dritten Abschnitt 118g unterteilt, von denen der erste Abschnitt 118e innerhalb des ersten Körperabschnittes 100e, der zweite Abschnitt 118f innerhalb des zweiten Körperabschnittes 100f und der dritte Abschnitt 118g innerhalb des dritten Körperabschnittes 100g ausgebildet ist. Im dargestellten Ausführungsbeispiel ist der Resonatorhohlraum 118 im Wesentlichen spiegelsymmetrisch zu einer nicht dargestellten vertikalen Symmetrieachse ausgebildet, die mit einer ebenfalls nicht dargestellten Mittelachse des Durchbruches 104 zusammenfällt. Fig. 4 lässt erkennen, dass sich der Rand 108a des Messfensters 108 über alle drei Wände 104a, 104b und 104c des Durchbruches 104 erstreckt, so dass der Resonatorhohlraum 118 über das Messfenster 108 an allen drei Seiten des Druchbruches 104 zu diesem hin offen ist. Wie Fig. 4 ferner erkennen lässt, erstrecken sich zwei Antennen 120, 122 durch den Resonatorhohlraum 118, von denen die eine Antenne 120 durch die in Fig. 2 erkennbare erste Antennendurchgangsbohrung 112 und die andere Antenne 122 durch die zweite Antennendurchgangsbohrung 114 geführt ist, wobei die Antennen 120, 122 in der zugehörigen sie aufnehmenden Antennendurchgangsbohrung koaxial angeordnet und somit von deren Wandung entsprechend beabstandet sind. Begrenzt wird der Resonatorhohlraum 118 zur Seite und nach oben hin durch eine umlaufende Seitenwand 124, die rechtwinklig zu den beiden Stirnseiten 100a, 100b des Resonatorkörpers 100 orientiert ist und einen stetigen Verlauf hat, wodurch im dargestellten Ausführungsbeispiel gemäß Fig. 4 der Resonatorhohlraum 118 die Form nach Art eines vierblättrigen Kleeblattes erhält. Auffällig sind dabei die in Richtung auf die Antennen 120, 122 seitlich vorspringenden Abschnitte 124a der Seitenwand 124, so dass an der Stelle der vorspringenden Wandabschnitte 124a der Abstand der Seitenwandung 124 zu der jeweils benachbarten Antenne 120 bzw. 122 minimiert wird. Dadurch wird die Fläche des magnetischen Durchflusses und somit die Kopplung geringer, was wiederum zu einer höheren Güte führt.

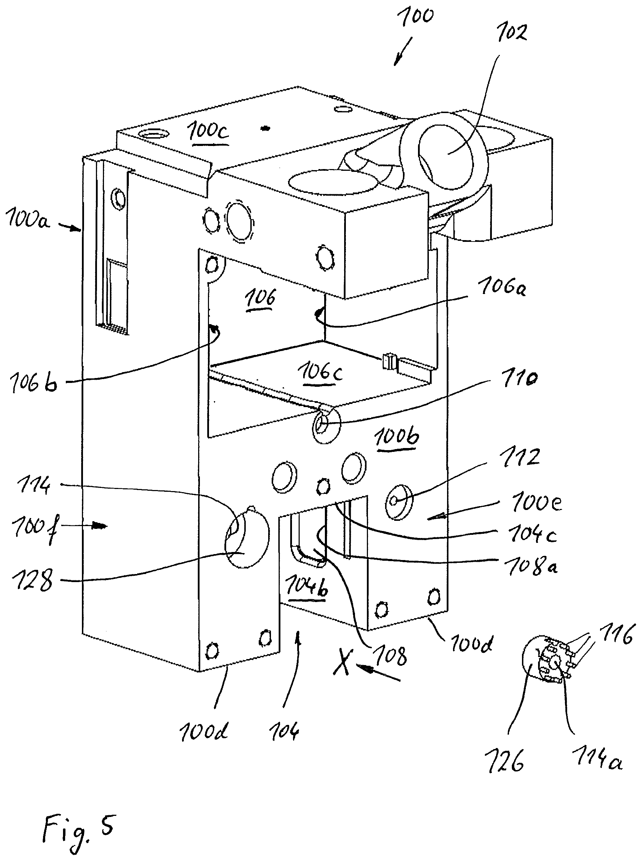

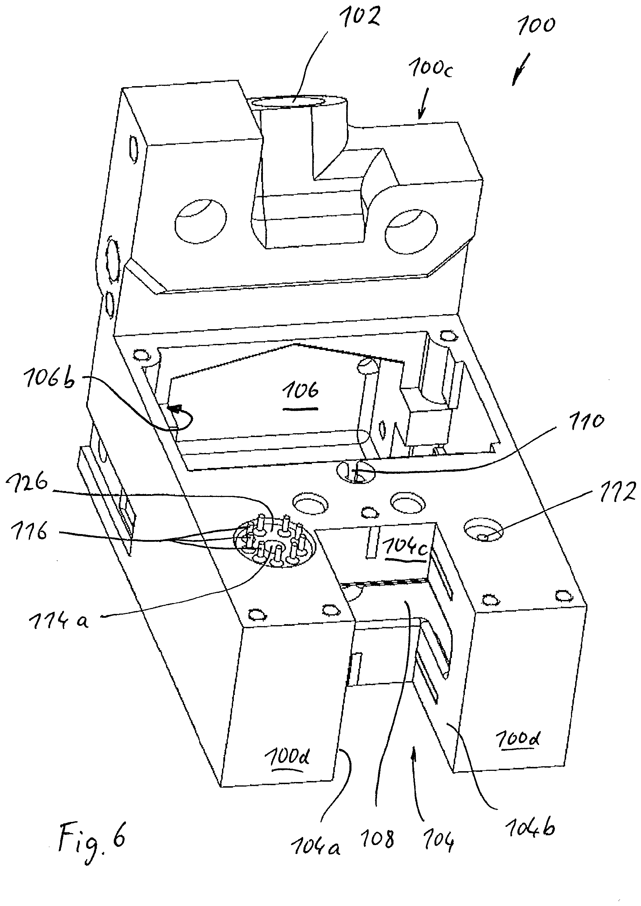

Die Figuren 5 und 6 zeigen mit Blick auf die zweite Stirnseite 100b eine zweite bevorzugte Ausführung des Resonatorkörpers 100, die sich von der ersten bevorzugten Ausführung gemäß Fig. 3 dadurch unterscheidet, dass die Stifte 116 nicht fest an der zugehörigen Stirnseite angebracht sind, sondern auf einem zylindrischen Träger 126 sitzen, der in eine entsprechende zylindrische Aussparung 128 angeordnet wird, welche in der zugehörigen Stirnseite des Resonatorkörpers 100 ausgebildet ist. Während in Fig. 5 der zylindrische Träger 126 vom Resonatorkörper 100 getrennt dargestellt ist, zeigt Fig. 6 den Träger 126 im eingebauten Zustand. Wie Figuren 5 und 6 ferner erkennen lassen, ist der zylindrische Träger 126 mit einer koaxialen Bohrung 114a versehen, die im eingebauten Zustand mit der in die Aufnahmebohrung 128 mündenden Antennendurchgangsbohrung 114 fluchtet und somit einen weiteren Abschnitt der Antennendurchgangsbohrung bildet. Die Konstruktion gemäß der in den Figuren 5 und 6 dargestellten zweiten Ausführung hat den Vorteil, dass für die Herstellung des Resonatorkörpers 100 ein kostengünstiges Gussverfahren gewählt werden kann, so dass dann nur der zylindrische Träger 126 mit den darauf angeordneten Stiften 116 mit Hilfe des präziseren, jedoch kostenintensiveren dreidimensionalen Druckverfahrens hergestellt werden kann. Alternativ ist selbstverständlich auch denkbar, den gesamten Resonatorkörper 100 mit Hilfe eines dreidimensionalen Druckverfahrens herzustellen.

In diesem Zusammenhang sei noch ergänzend darauf hingewiesen, dass die Anordnung der Stifte 116 im Bereich des einen Endes der ersten Antennendurchgangsbohrung 112 an der ersten Stirnseite 100a des Resonatorkörpers 100, wie Fig. 3 zeigt, und/oder am gegenüberliegenden anderen Ende der zweiten Antennendurchgangsbohrung 114 an der zweiten Stirnseite 100b des Resonatorkörpers 100, wie sich den Fign. 5 und 6 entnehmen lässt, vorgesehen sein kann, und zwar unabhängig davon, ob die Stifte 116 an der zugehörigen Stirnseite des Resonatorkörpers 100 gemäß der in Fig. 3 abgebildeten ersten bevorzugten Ausführung fest montiert oder gemäß der in den Figuren 5 und 6 abgebildeten zweiten bevorzugten Ausführung über einen Träger 126 angeordnet sind.

Ferner lässt Fig. 6 erkennen, dass sich das Messfenster 108 auch über die obere Wand 104c des Durchbruches 104 erstreckt.

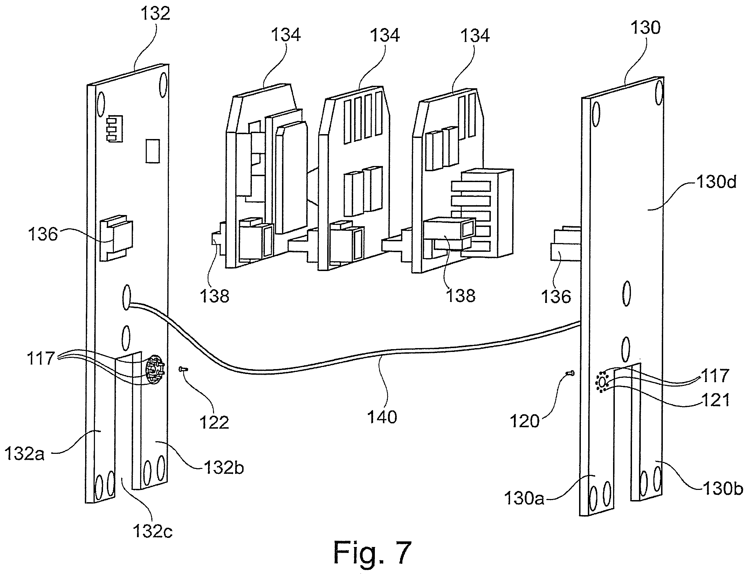

In Fig. 7 sind schematisch die für die Mikrowellenmesseinrichtung zu verwendenden elektronischen Baugruppen abgebildet. Diese sind im dargestellten Ausführungsbeispiel unterteilt in eine Hochfrequenzsendeplatine 130 und eine Hochfrequenzempfangsplatine 132 sowie drei Verarbeitungsplatinen 134, die gemeinsam einen Prozessorschaltkreis bilden. An Stelle von drei getrennten Verarbeitungsplatinen, die im vorliegenden Fall nebeneinander anzuordnen sind, kann natürlich auch eine größere oder kleinere Anzahl von Verarbeitungsplatinen oder ggf. auch nur eine einzige Prozessorplatine verwendet werden. Sämtliche Platinen 130, 132, 134 sind mit den erforderlichen elektronischen Bauteilen bestückt, die jedoch vorliegend nicht weiter im Einzelnen beschrieben werden. Für eine platzsparende Anordnung sollten insbesondere die Hochfrequenzsendeplatine 130 und die Hochfrequenzempfangsplatine 132 mit niedrig bauenden elektronischen Bauelementen wie insbesondere SMD-Bauelementen versehen sein. Dies ist von Vorteil im Hinblick darauf, dass die Hochfrequenzsendeplatine 130 an der ersten Stirnseite 100a des Resonatorkörpers 100 und die Hochfrequenzempfangsplatine 132 an der gegenüberliegenden zweiten Stirnseite 100b des Resonatorkörpers 100 anzuordnen ist. Da in den vorliegend beschriebenen Ausführungsbeispielen eine im Wesentlichen ganzflächige Anordnung der Hochfrequenzsendeplatine 130 und der Hochfrequenzempfangsplatine 132 an der jeweiligen Stirnseite 100a bzw. 100b des Resonatorkörpers 100 vorgesehen ist, sind diese beiden Platinen 130, 132 so gestaltet, dass der Durchbruch 104 nicht behindert wird, sondern frei bleibt. Deshalb weist die Hochfrequenzsendeplatine 130 in ihrem unteren Bereich zwei voneinander beabstandete streifenförmige Abschnitte 130a, 130b auf, zwischen denen eine Aussparung 130c gebildet wird, die hinsichtlich ihrer Abmessungen an die entsprechenden Abmessungen des Durchbruches 104 angepasst sind. Gleiches gilt auch für die Hochfrequenzempfangsplatine 132, die in ihrem unteren Bereich ebenfalls zwei voneinander beabstandete streifenförmige Abschnitte 132a, 132b aufweist, zwischen denen eine Aussparung 132c gebildet ist, deren Abmessungen entsprechend an die Abmessungen des Durchbruches 104 angepasst sind. Im dargestellten Ausführungsbeispiel gemäß Fig. 7 haben die Hochfrequenzsendeplatine 130 und die Hochfrequenzempfangsplatine 132 im Wesentlichen die gleiche Form und erstrecken sich im Wesentlichen über die gesamte Höhe des Resonatorkörpers 100.

Demgegenüber wird die aus den Verarbeitungsplatinen 134 bestehende Baugruppe im Hohlraum 106 des Resonatorkörpers 100 angeordnet, indem entweder die gesamte Baugruppedurch eine der beiden Öffnungen 106a, 106b des Hohlraumes 106 eingesetzt wird oder die Verarbeitungsplatinen 134 getrennt voneinander durch beide Öffnungen 106a, 106b des Hohlraumes 106 eingesetzt werden.

Nach Anordnung der Verarbeitungsplatinen 134 im Hohlraum 106 wird im dargestellten Ausführungsbeispiel seine eine Öffnung 106a von einem oberen Abschnitt 130d der an der ersten Stirnseite 100a des Resonatorkörpers 100 anzuordnenden Hochfrequenzsendeplatine 130 und die andere Öffnung 106b des Hohlraumes 106 von einem oberen Abschnitt 132d der an der zweiten Stirnseite 100b des Resonatorkörpers 100 anzuordnenden Hochfrequenzempfangsplatine 132 verschlossen.

Die eine der beiden in Fig. 4 abgebildeten Antennen 120, 122, beispielsweise die erste Antenne 120, bildet die Sendeantenne und ist auf der Hochfrequenzsendeplatine 130 angeordnet, während die andere dieser beiden Antennen 120, 122, beispielsweise die zweite Antenne 122, eine Empfangsantenne bildet, die auf der Hochfrequenzempfangsplatine 132 angeordnet ist, wie Fig. 7 des Weiteren erkennen lässt. Natürlich muss die jeweilige Antenne 120 bzw. 122 auf der Hochfrequenzsendeplatine 130 und der Hochfrequenzempfangsplatine 132 so positioniert sein, dass bei Anordnung an der jeweiligen Stirnseite 100a bzw. 100b des Resonatorkörpers 100 die jeweilige Antenne 120 bzw. 122 in die zugehörige Antennendurchgangsbohrung 112 bzw. 114 geführt ist. Hierzu kann die Hochfrequenzsendeplatine 130 und die Hochfrequenzempfangsplatine 132 jeweils mit einem Loch oder einer Bohrung versehen sein, die im eingebauten Zustand mit der zugehörigen Antennendurchgangsbohrung 112 bzw. 114 fluchtet und den Fuß der jeweiligen Antenne 120 bzw. 122 aufnimmt, der bevorzugt auf der auslegenden Seite der Platine mit einer entsprechenden Leiterbahn verlötet ist, wobei in Fig. 7 nur das Loch bzw. die Bohrung 121 zur Aufnahme des Fußes der Sendeantenne 120 in der Hochfrequenzsendeplatine 130 erkennbar gezeigt ist.

Da in den dargestellten Ausführungsbeispielen die erste Antennendurchgangsbohrung 112 im ersten Körperabschnitt 100e des Resonatorkörpers 100 und die zweite Antennendurchgangsbohrung 114 im zweiten Körperabschnitt 100f des Resonatorkörpers 100 liegt, ist die Sendeantenne 120 am (gemäß Fig. 7 rechten) unteren Abschnitt 130a der Hochfrequenzsendeplatine 130 und die Empfangsantenne 122 am (gemäß Fig. 7 linken) unteren Abschnitt 132b der Hochfrequenzempfangsplatine 132 angeordnet. Ebenfalls in Fig. 7 schematisch dargestellt ist die Ausbildung von Löchern 117 in kreisförmiger Anordnung um die jeweilige Antenne 120 bzw. 122 herum sowohl in der Hochfrequenzsendeplatine 130 als auch in der Hochfrequenzempfangsplatine 132, wobei jeweils ein Loch 117 einen der zuvor anhand von Fig. 3 bzw. anhand der Figuren 5 und 6 beschriebenen Stifte 116 aufnimmt. Somit müssen diese Löcher 117 hinsichtlich ihrer Position und Ausbildung mit den Stiften 116 übereinstimmen, wobei die Löcher 117 auch als komplementäres Pendant zu den Stiften 116 zu bezeichnen sind. Wie bereits zuvor erwähnt, sind die im Kreis angeordneten Stifte 116 zur Abschirmung vorgesehen und bilden zusammen mit der mittig in der zugehörigen Antennendurchgangsbohrung 112 bzw. 114 aufgenommenen Antenne 120 bzw. 122 eine quasi-koaxiale Anordnung. Um ihre Abschirmfunktion zu erfüllen, müssen die Stifte 116 mit Masse verbunden sein. Hierzu bestehen in den dargestellten Ausführungsbeispielen die Stifte 116 und der Resonatorkörper 100 aus elektrisch leitendem Material. Bei Anordnung der Hochfrequenzsendeplatine 130 und der Hochfrequenzempfangsplatine 132 an der jeweiligen Stirnseite 100a bzw. 100b des Resonatorkörpers 100 erstrecken sich die Stifte 116 durch die jeweiligen Löcher in der Platine und sind dort auf der außenliegenden Seite verlötet, um einen elektrischen Kontakt mit einer dort vorgesehenen Masseleitung herzustellen, was ebenfalls in den Figuren nicht dargestellt ist. Deshalb können die Stifte 116 auch als Masse-Pins bezeichnet werden.

Für die Transmission von Mikrowellen ist die Sendeantenne 120 entsprechend an die zugehörigen elektronischen Bauelemente auf der Hochfrequenzsendeplatine 130 angeschlossen, während für den Empfang der Mikrowellen die Empfangsantenne 122 an die zugehörigen elektronischen Bauelemente auf der Hochfrequenzempfangsplatine 132 angeschlossen ist. An ihrem freien Ende sind die Antennen 120, 122 mit elektrischer Masse kurzgeschlossen, indem sie sich an dem von ihrem Fuß entfernt gelegenen Ende der zugehörigen Antennendurchgangsbohrung 112 bzw. 114 in berührendem Eingriff mit der Wandung der Antennendurchgangsbohrung 112 bzw. 114 und somit mit dem Resonatorkörper 100 befinden, was in den Figuren nicht dargestellt ist. In diesem Zusammenhang sei angemerkt, dass der aus elektrisch leitendem Material wie insbesondere Metall bestehende Resonatorkörper 100 geerdet ist. Da somit die Antennen 120, 122 im Resonator kurzgeschlossen sind und die Ein- und Auskopplung induktiv ist, wird das in Strangförderrichtung gemäß dem in den Figuren 2a und 3 bis 5 abgebildeten Pfeil X verlaufende elektrische Feld im Wesentlichen ausgeblendet, so dass im Wesentlichen nur das quer zur Strangförderrichtung gemäß Pfeil X verlaufende Magnetfeld wirksam bleibt.

Wie Fig. 7 ferner schematisch erkennen lässt, verläuft zwischen der Hochfrequenzsendeplatine 130 und der Hochfrequenzempfangsplatine 132 ein Kabel 140. Dieses Kabel 140 ist im montierten Zustand in der Nut 110 im Boden 106c des Hohlraumes 106 verlegt. Insbesondere kann ein solches Kabel 140 an einen eine Trägerfrequenz erzeugenden lokalen Oszillator angeschlossen sein, so dass es sich bei einem derartigen Kabel um ein sog. LO-Kabel handelt. Auch wenn die Hochfrequenzsendeplatine 130 und die Hochfrequenzempfangsplatine 132 räumlich getrennt voneinander an den gegenüberliegenden Stirnseiten 100a, 100b des Resonatorkörpers 100 anzuordnen sind, ist für die Frequenzumsetzung die Verwendung eines gemeinsamen einzigen lokalen Oszillators, an den das Kabel 140 angeschlossen ist, zwingend erforderlich, um die Hochfrequenzsendeplatine 130 und die Hochfrequenzempfangsplatine 132 jeweils mit der identischen Trägerfrequenz versorgen zu können. Der in Figuren nicht dargestellte lokale Oszillator kann wahlweise in der Hochfrequenzsendeplatine 130 oder in der Hochfrequenzempfangsplatine 132 oder separat von diesen vorgesehen sein. Dabei kann als Kabel 140 bevorzugt ein Mikro-SMA-Kabel verwendet werden.

Wie Fig. 7 ferner schematisch erkennen lässt, ist auf der der jeweiligen Stirnseite 100a bzw. 100b des Resonatorkörpers 100 zugewandten Seite der Hochfrequenzsendeplatine 130 und der Hochfrequenzempfangsplatine 132 jeweils ein Steckverbinder 136 einer ersten Art und an der gegenüberliegenden Seite der beiden äußeren Verarbeitungsplatinen 134 ein Steckverbinder 138 einer zweiten Art angeordnet. Diese Steckverbinder 136 und 138 sind jeweils so zueinander ausgerichtet, dass bei Anordnung der Hochfrequenzsendeplatine 130 und der Hochfrequenzempfangsplatine 132 an der jeweiligen Stirnseite 100a bzw. 100b des Resonatorkörpers 100 die Steckverbinder 136 und 138 jeweils durch die entsprechende Öffnung 106a bzw. 106b des Hohlraumes 106 hindurch in Kontakt miteinander gelangen, um eine elektrische Verbindung der von den Verarbeitungsplatinen 134 gebildeten Baugruppe mit der Hochfrequenzsendeplatine 130 und der Hochfrequenzempfangsplatine 132 herzustellen.

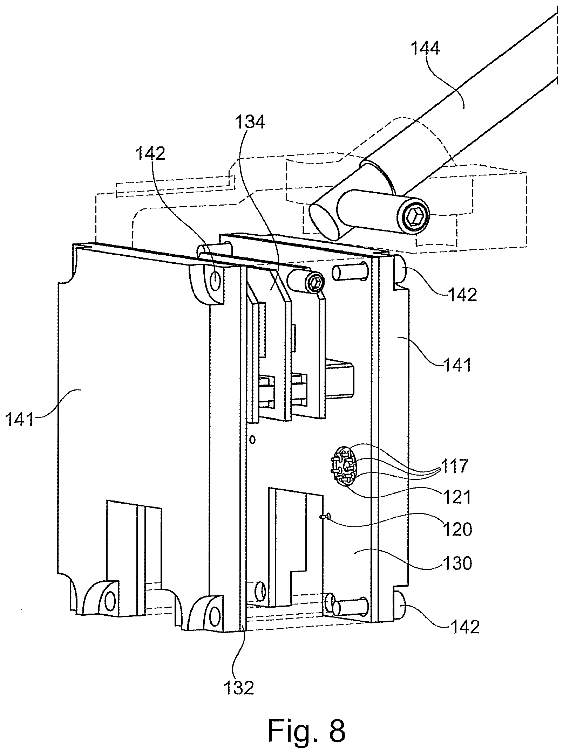

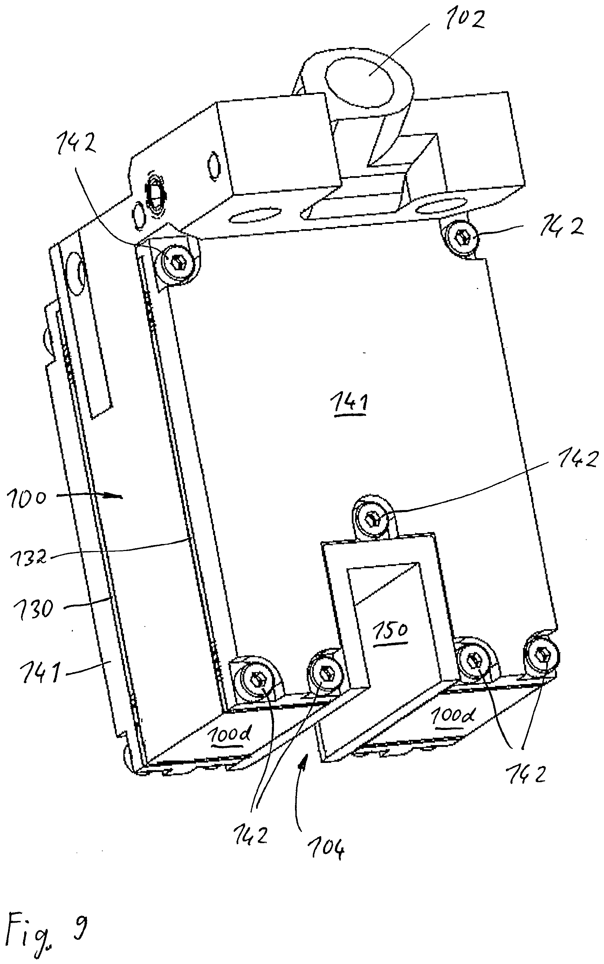

Während in Fig. 7 die für die Anordnung im und am Resonatorkörper 100 vorgesehenen Schaltungsplatinen 130, 132 und 134 in perspektivischer auseinandergezogener Ansicht dargestellt sind, zeigt Fig. 8 in gegenüber Fig. 7 geänderter perspektivischer Ansicht die Schaltungsplatinen von Fig. 7 in ihrer tatsächlichen relativen Positionierung zueinander bei Anordnung am und im Resonatorkörper 100 ohne Darstellung des Resonatorkörper 100. In Fig. 9 ist in gegenüber Fig. 8 geänderter perspektivischer Ansicht dann die Messvorrichtung im komplett zusammengebauten Zustand abgebildet.

Wie die Figuren 8 und 9 erkennen lassen, wird im dargestellten Ausführungsbeispiel die Rück- bzw. Außenseite der Hochfrequenzsendeplatine 130 und der Hochfrequenzempfangsplatine 132 jeweils von einem Hochfrequenzabschirmdeckel 141 bedeckt. Befestigt sind die beiden Hochfrequenzabschirmdeckel 141 am Resonatorkörper 100 mit Hilfe von Schrauben 142, die gleichzeitig auch für eine Fixierung der Hochfrequenzsendeplatine 130 und der Hochfrequenzempfangsplatine 132 am Resonatorkörper 100 sorgen. Des Weiteren lässt Fig. 8 noch den Abschnitt eines Kabelrohres 144 erkennen, der mit der in den Figuren 3 sowie 5 und 6 abgebildeten tüllenförmigen Kabeldurchführung 102 gekoppelt wird und zur Führung von elektrischen Versorgungs- und Signalkabeln zum Anschluss an die Schaltungsplatinen 130, 132 und/oder 134 vorgesehen ist.

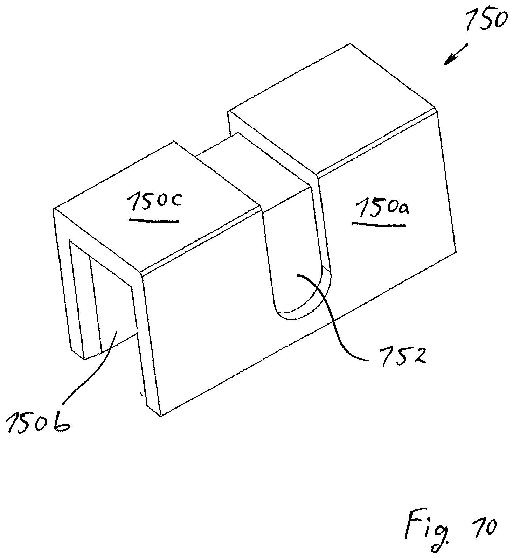

Ferner lässt Fig. 9 erkennen, dass im dargestellten Ausführungsbeispiel im Durchbruch 104 zusätzlich ein Einsatz 150 angeordnet ist, der als Einzelheit in Fig. 10 perspektivisch dargestellt ist. Der Einsatz 150 hat die Querschnittsform eines eckigen "U" in Anpassung an die Querschnittsform des Durchbruches 104 und weist zwei gegenüberliegende Seitenwände 150a, 150b auf, die in der Einbaustellung der Messvorrichtung vertikal orientiert und außerdem durch eine Querwand 150c miteinander verbunden sind, welche im eingebauten Zustand die obere Wand bildet, die in der Einbaustellung der Messvorrichtung horizontal orientiert ist. Bei Anordnung des Einsatzes 150 im Durchbruch 104 liegt somit die eine Seitenwand 150a des Einsatzes 150 an der einen Seitenwand 104a des Durchbruches 104, die gegenüberliegende andere Seitenwand 150b des Einsatzes 150 an der gegenüberliegenden anderen Seitenwand 104b des Durchbruches 104 und die Querwand 150c des Einsatzes 150 an der oberen Wand 104c des Durchbruches 104 an.

Der Einsatz 150 weist abriebfestes, elektrisch nicht leitendes und im Wesentlichen verlustarmes dielektrisches Material auf, bei dem es sich bevorzugt um Keramikmaterial, insbesondere Al₂O₃-ZrO₂ und/oder Quarz-Glas handeln kann. Der Einsatz 150 sorgt für einen Schutz des Resonatorkörpers 100 im Bereich seines Durchbruches 104 vor erhöhtem Verschleiß aufgrund der durch den vorbeibewegten Tabakstrang erzeugten Reibung. Dies gilt insbesondere auch für das Messfenster 108, das gleichermaßen vom Einsatz 150 bedeckt und somit geschützt wird. Um jedoch an dieser Stelle die dielektrischen Einflüsse möglichst gering zu halten, ist im dargestellten Ausführungsbeispiel die Dicke bzw. Wandstärke des Einsatzes 150 im Bereich des Messfensters verringert, indem im Bereich des Messfensters der Einsatz 150 mit einer Ausnehmung 152 geringerer Dicke versehen ist, wie Fig. 10 erkennen lässt.

Zweckmäßigerweise sollte der Einsatz 150 auswechselbar und seine Querschnittsfläche und -form an die des Hohlraumes 16c des Strangführungskanals 16 (Fig. 2) entsprechend angepasst sein. Gleiches gilt auch für das gewählte Material, insbesondere bei Verwendung verschiedener Breiten des Strangführungskanals 16.

Die Auswechselbarkeit des Einsatzes 150 kann vorteilhaft auch dazu verwendet werden, mehrere Einsätze mit unterschiedlichen Querschnittsabmessungen vorzuhalten. Somit ist es möglich, den Durchbruch 104 im Resonatorkörper 100 mit Hilfe eines entsprechend geeigneten Einsatzes 150 aus der Auswahl mehrerer Einsätze an die Querschnittsform des Hohlraumes 16c des jeweils verwendeten Strangführungskanals 16 entsprechend anzupassen, ohne dass verschiedene Resonatorkörper 100 mit einem unterschiedlich bemessenen Durchbruch 104 vorgehalten werden müssen.

Fig. 11a zeigt gemäß einem dritten bevorzugten Ausführungsbeispiel den Resonatorkörper 100, geschnitten in einer Ebene rechtwinklig zu der Strangförderrichtung gemäß Pfeil X und dementsprechend auch zur Längserstreckung des Durchbruches 104, und somit in einer ähnlichen perspektivischen Schnittansicht wie Fig. 4, allerdings mit gegenüber der Ansicht von Fig. 4 entgegengesetzt orientierter Strangförderrichtung gemäß Pfeil X. Das dritte bevorzugte Ausführungsbeispiel gemäß Fig. 11a unterscheidet sich von dem ersten bevorzugten Ausführungsbeispiel gemäß den Figuren 3 und 4 insbesondere dadurch, dass der Resonatorhohlraum 118 beiderseits des Durchbruches 104, jedoch getrennt von diesem an der Unterseite 100d des Resonatorkörpers 100 offen ist und der Durchbruch 104 an der Stelle seines nach unten offenen Bereiches 104d von einem Einführklotz 160 verschlossen wird, der einen weiteren Abschnitt 118h des Resonatorhohlraumes 118 enthält, welcher mit dem im Resonatorkörper 100 ausgebildeten Resonatorhohlraum 118 in Verbindung gebracht wird bzw. steht. Nachfolgend werden die Unterschiede des dritten bevorzugten Ausführungsbeispiels gemäß Fig. 11a im Einzelnen erläutert, wobei zur Vermeidung von Wiederholungen bezüglich derjenigen Komponenten, die mit den gleichen Bezugszeichen wie in den Figuren 3 und 4 bezeichnet sind, auf die obige Beschreibung des ersten bevorzugten Ausführungsbeispiels verwiesen wird. Ferner sei an dieser Stelle noch ergänzend angemerkt, dass wie beim ersten bevorzugten Ausführungsbeispiel auch der Resonatorkörper 100 gemäß dem dritten bevorzugten Ausführungsbeispiel in seinem oberen Körperabschnitt 100g mit einem Hohlraum ähnlich dem Hohlraum 106 gemäß dem ersten bevorzugten Ausführungsbeispiel versehen, dieser Hohlraum jedoch in Fig. 11a nicht abgebildet ist.

Wie Fig. 11a erkennen lässt, ist der erste Abschnitt 118e des Resonatorhohlraumes 118 an einem einen Teil der Unterseite 100d des Resonatorkörpers 100 bildenden unteren freien Ende des ersten Körperabschnittes 100e nach unten offen und dementsprechend dort mit einer ersten Öffnung 118ee versehen und ist in gleicher Weise der zweite Abschnitt 118f des Resonatorhohlraumes 118 an einem einen weiteren Teil der Unterseite 100d des Resonatorkörpers 100 bildenden unteren freien Ende des zweiten Körperabschnittes 100f nach unten offen und dementsprechend dort mit einer zweiten Öffnung 118ff versehen.

Ein weiteres wichtiges Unterschiedsmerkmal bei dem in Fig. 11a gezeigten dritten Ausführungsbeispiel besteht darin, wie bereits zuvor angedeutet worden ist, einen Einführklotz 160 vorzusehen, der mit seiner zu dem Resonatorkörper 100 und dem Durchbruch 104 hin gerichteten, in der abgebildeten Einbaustellung der Messvorrichtung nach oben weisenden Oberseite 116a an der Unterseite 100d des Resonatorkörpers 100 anzuordnen ist, wodurch der untere offene Bereich 104d des Durchbruches 104 verschlossen wird. Wie Fig. 11a in Verbindung mit Fig. 11b, in der nur der Einführklotz 160 in perspektivischer Ansicht auf seiner Oberseite 160a abgebildet ist, erkennen lässt, enthält der Einführklotz 160 einen Hohlraum, der einen vierten Abschnitt 118h des Resonatorhohlraumes 118 bildet. Dieser vierte Abschnitt 118h des Resonatorhohlraumes 118 erstreckt sich unterhalb der Oberseite 160a des Einführklotzes 160 und ist an seinen beiden Endabschnitten jeweils mit einem in der Oberseite 160a des Einführklotzes 160 ausgebildeten offenen Ende 118ha bzw. 118hb versehen. Dabei sind die beiden offenen Enden 118ha, 118hb des vierten Abschnittes 118h des Resonatorhohlraumes 118 so positioniert, dass bei Anordnung des Einführklotzes 160 mit seiner Oberseite 160a an der Unterseite 100d des Resonatorkörpers 100 das erste offene Ende 118ha des vierten Abschnittes 118h des Resonatorhohlraumes 118 mit dem offenen Ende 118ee des ersten Abschnittes 118e des Resonatorhohlraumes 118 und das zweite offene Ende 118hb des vierten Abschnittes 118h des Resonatorhohlraumes 118 mit dem offenen Ende 118ff des zweiten Abschnittes 118f des Resonatorhohlraumes 118 fluchtet. Somit gelangt der vierte Abschnitt 118h des Resonatorhohlraumes 118 in Verbindung mit den ersten und zweiten Abschnitten 118e und 118f des Resonatorhohlraumes 118, indem er diese überbrückt, so dass im bevorzugten dritten Ausführungsbeispiel der Resonatorhohlraum 118 nicht nur von den ersten bis dritten Abschnitten 118e bis 118g, sondern zusätzlich auch noch von dem vierten Abschnitt 118h gebildet wird und dadurch ein ringförmiger Hohlraum 118 entsteht.

Wie insbesondere Fig. 11b ferner erkennen lässt, ist zwischen den beiden offenen Enden 118ha und 118hb des vierten Abschnittes 118h des Resonatorhohlraumes 118 ein weiteres Messfenster 109 ausgebildet, über das der vierte Abschnitt 118h des Resonatorhohlraumes 118 an der Oberseite 160a des Einführklotzes 160 offen ist. Dabei ist dieses weitere Messfenster 109 so positioniert, dass es bei Anordnung des Einführklotzes 160 an der Unterseite 100d des Resonatorkörpers 100 in im Wesentlichen fluchtender Ausrichtung zum Durchbruch 104 gelangt. Somit bildet das weitere Messfenster 109 zusammen mit dem Messfenster 108 ein gemeinsames Messfenster zwischen dem umlaufenden Resonatorhohlraum 118 und dem Durchbruch 104.

Wie insbesondere Fig. 11b des Weiteren erkennen lässt, ist in der Oberseite 160a des Einführklotzes 160, der im dargestellten Ausführungsbeispiel die Form eines Quaders oder einer Platte hat, ein zur Oberseite 160a und somit nach oben offener Kanal 162 eingearbeitet, der für eine bessere Führung des durch den Durchbruch 104 geförderten strangförmigen Tabakkuchens bei Anordnung des Einführklotzes 160 an der Unterseite 100d des Resonatorkörpers 100 den Boden des Durchbruches 104 bildet und im dargestellten Ausführungsbeispiel im Querschnitt rechteckig und entsprechend an den Durchbruch 104 geometrisch angepasst ist.

Außerdem wird mit Hilfe des Einführklotzes 160 verhindert, dass Teile des durch den Durchbruch 104 geförderten strangförmigen Tabakkuchens nach unten fallen; dieser Umstand tritt nämlich insbesondere dann auf, wenn der strangförmige Tabakkuchen den Strangführungskanal 16 und somit auch den mit diesem fluchtenden Durchbruch 104 im Wesentlichen komplett ausfüllt. Da insoweit der Einführklotz 160 auch eine Führungsfunktion für den strangförmigen Tabakkuchen in Strangführungsrichtung gemäß Pfeil X bildet, lässt sich der Einführklotz 160 alternativ auch als Führungselement bezeichnen.

Wie schließlich Fig. 11a des Weiteren erkennen lässt, ist wie bei dem in den Figuren 9 und 10 dargestellten Ausführungsbeispiel im Durchbruch 104 zusätzlich ein Einsatz 150 angeordnet, der abriebfest ist, elektrisch nicht leitendes und im Wesentlichen verlustarmes dielektrisches Material aufweist und bereits zuvor anhand den Figuren 9 und 10 im Einzelnen beschrieben worden ist. Zusätzlich im dargestellten dritten Ausführungsbeispiel ist auch in der Oberseite 160a des Einführklotzes 160 ein weiterer Einsatz 164 aus abriebfestem, elektrisch nicht leitendem und im Wesentlichen verlustarmem dielektrischem Material vorgesehen, der gemeinsam die beiden offenen Enden 118ha und 118hb des vierten Abschnittes 118h des Resonatorhohlraumes 118 und das dazwischenliegende weitere Messfenster 109 bedeckt. Hierzu ist im dargestellten Ausführungsbeispiel in der Oberseite 160a des Einführklotzes 160 nach Art eines Absatzes eine die beiden offenen Enden 118ha und 118hb des vierten Abschnittes 118h des Resonatorhohlraumes 118 außerhalb des nach oben offenen Kanals 162 umgebende Aussparung 166 ausgebildet, die den weiteren Einsatz 164 aufnimmt, so dass dieser in die Oberseite 160a des Einführklotzes 160 eingelassen ist und mit seiner Oberseite mit der Oberseite 160a des Einführklotzes 160 im Wesentlichen fluchtet. Grundsätzlich ist es natürlich aber auch denkbar, beim dritten Ausführungsbeispiel auf die Anordnung der Einsätze 150, 164 zu verzichten.

Bei größeren Tabakmengen kann es nun vorkommen, dass der Strangführungskanal 16 und somit auch der Durchbruch 104 im Wesentlichen komplett ausgefüllt wird. In einem solchen Fall kann das elektrische Feld in der Einbaustellung der dargestellten Messvorrichtung nach unten zum offenen Bereich 104d des Durchbruches 104 hin abnehmen, so dass es dann zu einer Sättigung des Messsignals kommen kann und dadurch Änderungen in der Tabakmenge nur noch unzureichend gemessen werden können. Bei dem zuvor anhand der Figuren 11a und 11b erläuterten dritten Ausführungsbeispiel wird der Resonatorhohlraum 118 nach unten hin, bevorzugt im Wesentlichen vollständig, geöffnet und in dem darunter anzuordnenden Einführklotz 160 mit dem vierten Abschnitt 118h des Resonatorhohlraumes 118 ein zusätzlicher Resonatorhohlraumabschnitt geschaffen. Der so insgesamt entstehende, bevorzugt dann ringförmig ausgebildete, Resonatorhohlraum 118 erstreckt sich dadurch über zwei separate Bauteile, nämlich mit seinen ersten bis dritten Abschnitten 118e bis 118g durch den Resonatorkörper 100 und mit seinem vierten Abschnitt 118h durch den darunterliegenden Einführklotz 160, das den Durchbruch 104 an seinem unteren offenen Bereich 104d verschließt. Dadurch wird die Möglichkeit geschaffen, das Messfenster 108 durch die Ausbildung des zusätzlichen Messfensters 109 in der Oberseite 160a des Einführklotzes 160 nach unten hin zu vergrößern. Mit einer solchen Konstruktion lässt sich ein resultierendes elektromagnetisches Feld erzeugen, das nun mehr einem elektromagnetischen Feld von einem geschlossenen Resonator als einem elektromagnetischen Feld von einem offenen Resonator ähnelt und eine stärkere Homogenität zeigt, also ähnlich wie es bei einem geschlossenen Resonator, beispielsweise des "MIDAS" der Anmelderin, der Fall ist, dessen elektromagnetisches Feld eine radiale Abhängigkeit besitzt und zum Zentrum hin schwächer wird. Das Messsignal einer Ausführungsform mit einem Messfenster 109 ist zwar möglicherweise etwas schwächer, jedoch auf jeden Fall deutlich linearer und erlaubt zudem eine größere Aufschüttung der zu messenden Tabakmenge, wobei das Messsignal sich linear in Bezug auf die Aufschütthöhe der Tabakmenge verhält und dadurch eine annähernd konstante Empfindlichkeit für verschiedene Aufschütthöhen, insbesondere von 1 mm bis 12 mm, besitzt.

## Patentansprüche

1. Messvorrichtung für einen Saugbandförderer einer Strangmaschine der Tabak verarbeitenden Industrie zur Förderung von Material, insbesondere Tabak, wobei der Saugbandförderer wenigstens einen nach außen, bevorzugt nach unten, offenen Strangführungskanal (16) aufweist, dessen Hohlraum (16c) durch zwei seitliche Kanalwangen (16a, 16b) und ein Saugband (17) entlang eines Förderweges begrenzt ist,
wobei die Messvorrichtung zur Bestimmung von Eigenschaften des entlang des Förderweges geförderten Materials vorgesehen ist und einen Körper (100), wenigstens eine Mikrowellenmesseinrichtung und wenigstens einen Resonatorhohlraum (118) aufweist,
wobei der Körper (100) eine erste Stirnseite (100a) und eine gegenüberliegende zweite Stirnseite (100b) sowie einen in beide Stirnseiten (100a, 100b) mündenden und mit einem nach außen, bevorzugt in der Einbaustellung der Messvorrichtung nach unten, offenen Bereich (104d) versehenen Durchbruch (104) aufweist und so ausgebildet ist, dass der Körper (100) in der Einbaustellung der Messvorrichtung unter Ausrichtung des Durchbruches (104) zum Hohlraum (16c) des Strangführungskanals (16) mit einer seiner Stirnseiten (100a, 100b) an den Strangführungskanal (16) anordbar oder mit seinen beiden Stirnseiten (100a, 100b) in den Strangführungskanal (16) einpassbar ist, und
wobei der Resonatorhohlraum (118) innerhalb des Körpers (100) benachbart zum Durchbruch (104) ausgebildet und über mindestens ein Messfenster (108) zum Durchbruch (104) hin offen ist,
**dadurch gekennzeichnet, dass**
die Mikrowellenmesseinrichtung in mindestens eine Hochfrequenzeinheit (130, 132) und in eine Verarbeitungseinheit (134) unterteilt ist und
die mindestens eine Hochfrequenzeinheit (130, 132) benachbart zum Durchbruch (104) und die Verarbeitungseinheit (134) vom Durchbruch (104) entfernt am und/oder im Körper (100) angeordnet ist.

2. Vorrichtung nach Anspruch 1, **dadurch gekennzeichnet, dass** die Mikrowellenmesseinrichtung zwei voneinander beabstandete Hochfrequenzeinheiten (130, 132) aufweist, von denen die eine Hochfrequenzeinheit (130) eine Hochfrequenzsendeeinheit (130) und die andere Hochfrequenzeinheit (132) eine Hochfrequenzempfangseinheit (132) ist, wobei insbesondere die Hochfrequenzsendeeinheit (130) an der einen Stirnseite (100a) des Körpers (100) und die Hochfrequenzempfangseinheit (132) an der anderen Stirnseite (100b) des Körpers (100) angeordnet ist, und/oder dass die mindestens eine Hochfrequenzeinheit (130, 132) an mindestens einer Stirnseite (100a, 100b) des Körpers (100) angeordnet ist.

3. Vorrichtung nach Anspruch 2, bei welcher der Körper (100) einen ersten Körperabschnitt (100e), einen zweiten Körperabschnitt (100f) und einen dritten Körperabschnitt (100g) aufweist und der Durchbruch (104) an seiner einen Seite vom ersten Körperabschnitt (100e) und an seiner gegenüberliegenden anderen Seite vom zweiten Körperabschnitt (100f) sowie an seiner in der Einbaustellung der Messvorrichtung oberen Seite vom dritten Körperabschnitt (100g) begrenzt ist, so dass der dritte Körperabschnitt (100g) den ersten Körperabschnitt (100e) und den zweiten Körperabschnitt (100f) miteinander verbindet und der erste Körperabschnitt (100e) und der zweite Körperabschnitt (100f) jeweils einen freien Schenkel bilden,
**dadurch gekennzeichnet, dass** die mindestens eine Hochfrequenzeinheit (130, 132) mit mindestens einem Abschnitt an mindestens einem der ersten und zweiten Körperabschnitte (100e, 100f) angeordnet ist.

4. Vorrichtung nach mindestens einem der vorangegangenen Ansprüche, **dadurch gekennzeichnet, dass** der Körper (100) mindestens eine in beide Stirnseiten (100a, 100b) mündende Durchführung (110) enthält, durch die mindestens ein, insbesondere als koaxial ausgebildetes, Kabel (140) verlegt ist.

5. Vorrichtung nach Anspruch 2 sowie nach Anspruch 4, **dadurch gekennzeichnet, dass** das Kabel (140) an die Hochfrequenzsendeeinheit (130) und/oder an die Hochfrequenzempfangseinheit (132) angeschlossen ist und dass insbesondere die Mikrowellenmesseinrichtung einen eine Trägerfrequenz erzeugenden lokalen Oszillator aufweist, an den das Kabel (140) angeschlossen ist.

6. Vorrichtung nach mindestens einem der vorangegangenen Ansprüche, **dadurch gekennzeichnet, dass** die Mikrowellenmesseinrichtung mindestens zwei Antennen (120, 122) aufweist, von denen die eine Antenne eine Sendeantenne und die andere Antenne eine Empfangsantenne ist, und die beiden Antennen (120, 122) in einem solchen Abstand voneinander angeordnet sind, dass die eine Antenne (120) benachbart zu der einen Seite des Durchbruches (104) durch eine im Körper (100) ausgebildete Öffnung (112) in den Resonatorhohlraum (118) und die andere Antenne (122) benachbart zu der gegenüberliegenden anderen Seite des Durchbruches (104) durch eine im Körper (100) ausgebildete Öffnung (114) in den Resonatorhohlraum (118) ragt, wobei insbesondere die Antennen (120, 122) im Bereich ihres freien Endes mit elektrischer Masse kurzgeschlossen sind.

7. Vorrichtung nach mindestens einem der vorangegangenen Ansprüche, **dadurch gekennzeichnet, dass** der Resonatorhohlraum (118) in Bezug auf eine in Einbaustellung vertikal verlaufende Mittellinie des Durchbruches (104) spiegelsymmetrisch ausgebildet ist.

8. Vorrichtung nach mindestens einem der vorangegangenen Ansprüche, bei welcher der Körper (100) einen ersten Körperabschnitt (100e), einen zweiten Körperabschnitt (100f) und einen dritten Körperabschnitt (100g) aufweist und der Durchbruch (104) an seiner einen Seite vom ersten Körperabschnitt (100e) und an seiner gegenüberliegenden anderen Seite vom zweiten Körperabschnitt (100f) sowie an seiner in der Einbaustellung der Messvorrichtung oberen Seite vom dritten Körperabschnitt (100g) begrenzt ist, so dass der dritte Körperabschnitt (100g) den ersten Körperabschnitt (100e) und den zweiten Körperabschnitt (100f) miteinander verbindet und jeweils der erste Körperabschnitt (100e) und der zweite Körperabschnitt (100f) einen freien Schenkel bilden und einen benachbart zum offenen Bereich des Durchbruches (104) befindliches, in der Einbaustellung der Messvorrichtung einen Teil einer Unterseite (100d) des Körpers (100) bildendes, freies Ende aufweisen,
**dadurch gekennzeichnet, dass** der offene Bereich (104d) des Durchbruches (104) zumindest während des Betriebes der Messvorrichtung durch Anordnung eines Führungselementes (160) gleichzeitig am freien Ende des ersten Körperabschnittes (100e) und am freien Ende des zweiten Körperabschnittes (100f) verschließbar ist und der Resonatorhohlraum (118) einen ersten Abschnitt (118e), einen zweiten Abschnitt (118f), einen dritten Abschnitt (118g) und einen vierten Abschnitt (118h) aufweist, von denen der erste Abschnitt (118e) im ersten Körperabschnitt (100e) ausgebildet und an dessen freiem Ende (118ee) nach außen offen ist, der zweite Abschnitt (118f) im zweiten Körperabschnitt (100f) ausgebildet und an dessen freiem Ende (118ff) nach außen offen ist, der dritte Abschnitt (118f) im dritten Körperabschnitt (100g) ausgebildet ist und im Führungselement (160) der vierte Abschnitt (118h) ausgebildet ist, der bei Anordnung des Führungselementes (160) an den freien Enden der ersten und zweiten Körperabschnitte (100e, 100f) in Verbindung mit dem ersten Abschnitt (118e) und dem zweiten Abschnitt (118f) des Resonatorhohlraumes (118) steht.

9. Vorrichtung nach Anspruch 8, **dadurch gekennzeichnet, dass** das Führungselement (160) an seiner zu dem Körper (100) und dem Durchbruch (104) hin gerichteten, in der Einbaustellung der Messvorrichtung eine Oberseite bildenden, Seite (160a) ein Messfenster (109), über das der im Führungselement (160) ausgebildete vierte Abschnitt (118h) des Resonatorhohlraumes (118) zum offenen Bereich des Durchbruches (104) hin offen ist, und/oder der im Führungselement (160) ausgebildete vierte Abschnitt (118h) des Resonatorhohlraumes (118) zwei Enden (118ha, 118hb) aufweist, die an der zu dem Körper (100) und dem Durchbruch (104) hin gerichteten Seite des Führungselementes (160) offen sind und von denen bei Anordnung des Führungselementes an den freien Enden der ersten und zweiten Körperabschnitte (100e, 100f) das eine Ende (118ha) des vierten Abschnittes (118h) des Resonatorhohlraumes (118) zum freien Ende des ersten Körperabschnittes (100e) und das andere Ende (118hb) des vierten Abschnittes (118h) des Resonatorhohlraumes (118) zum freien Ende des zweiten Körperabschnittes (100f) ausgerichtet ist, und/oder eine, bevorzugt nuten- oder kanalförmige, zum offenen Bereich (104d) des Durchbruches (104) offene Aussparung (162), die in Bezug auf den offenen Bereich (104d) des Durchbruches (104) so ausgerichtet und ausgebildet ist, dass der Körper (100) in der Einbaustellung der Messvorrichtung unter Ausrichtung der Anordnung aus Durchbruch (104) und Aussparung (162) des Führungselementes (160) zum Hohlraum (16c) des Strangführungskanals (16) mit einer seiner Stirnseiten (100a, 100b) an den Strangführungskanal (16) anordbar oder mit seinen beiden Stirnseiten (100a, 100b) in den Strangführungskanal (16) einpassbar ist, aufweist.

10. Vorrichtung nach mindestens einem der vorangegangenen Ansprüche **dadurch gekennzeichnet, dass** die mindestens eine Hochfrequenzeinheit (130, 132) zumindest teilweise durch ein Hochfrequenzabschirmelement (141) abgeschirmt ist.

11. Saugbandförderer einer Strangmaschine der Tabak verarbeitenden Industrie zur Förderung von Material, insbesondere Tabak, mit wenigstens einem nach außen, bevorzugt nach unten, offenen Strangführungskanal (16), dessen Hohlraum (16c) durch zwei seitliche Kanalwangen (16a, 16b) und ein Saugband (17) entlang eines Förderweges begrenzt ist,
**gekennzeichnet durch** eine Messvorrichtung nach mindestens einem der vorangegangenen Ansprüche.

## Claims

1. A measuring apparatus for a suction conveyor belt of a shredding machine of the tobacco-processing industry for conveying material, in particular tobacco, wherein the suction conveyor belt comprises at least one outwardly, preferably downwardly, open strand guide channel (16), the cavity (16c) of which is bounded by two lateral channel shears (16a, 16b) and a suction belt (17) along a conveying path,
wherein the measuring apparatus is provided for determining properties of the material conveyed along the conveying path and comprises a body (100), at least one microwave measuring device, and at least one resonator cavity (118),
wherein the body (100) comprises a first end face (100a) and an opposing second end face (100b) as well as an aperture (104) opening into both end faces (100a, 100b) and equipped with an outwardly open, preferably downwardly open in the installed position of the measuring apparatus, region (104d) and is configured such that, in the installed position of the measuring apparatus where the aperture (104) is aligned with the cavity (16c) of the strand guide channel (16), the body (100) can be arranged with one of its end faces (100a, 100b) on the strand guide channel (16) or can be fit into the strand guide channel (16) with its two end faces (100a, 100b), and wherein the resonator cavity (118) is formed within the body (100) adjacent to the aperture (104) and is open towards the aperture (104) via at least one measuring window (108),
**characterized in that**
the microwave measuring device is divided into at least one high-frequency unit (130, 132) and a processing unit (134), and
the at least one high-frequency unit (130, 132) is arranged adjacent to the aperture (104), and the processing unit (134) is arranged so as to be remote from the aperture (104) on and/or in the body (100).

2. The device according to claim 1, **characterized in that** the microwave measuring device comprises two high-frequency units (130, 132) that are spaced apart from one another, of which the one high-frequency unit (130) is a high-frequency transmitter unit (130) and the other high-frequency unit (132) is a high-frequency receiver unit (132), wherein, in particular, the high-frequency transmitter unit (130) is arranged on the one end face (100a) of the body (100) and the high-frequency receiver unit (132) is arranged on the other end face (100b) of the body (100), and/or that the at least one high-frequency unit (130, 132) is arranged on at least one end face (100a, 100b) of the body (100).

3. The device according to claim 2, wherein the body (100) comprises a first body portion (100e), a second body portion (100f), and a third body portion (100g), and the aperture (104) is bounded on its one side by the first body portion (100e) and on its opposite other side by the second body portion (100f) as well as on its - in the installed position of the measuring device - upper side by the third body portion (100g), such that the third body portion (100g) joins the first body portion (100e) and the second body portion (100f) to one another, and the first body portion (100e) and the second body portion (100f) respectively form a free leg, **characterized in that** the at least one high-frequency unit (130, 132) is arranged with at least one portion on at least one of the first and second body portions (100e, 100f).

4. The device according to at least one of the preceding claims, **characterized in that** the body (100) contains at least one passage (110) opening into both end faces (100a, 100b) through which at least one cable (140) is laid, being configured in particular coaxially.

5. The device according to claim 2 as well as claim 4, **characterized in that** the cable (140) is connected to the high-frequency transmitter unit (130) and/or to the high-frequency receiver (132) and that the microwave measuring device in particular comprises a local oscillator generating a carrier frequency, to which the cable (140) is connected.

6. The device according to at least one of the preceding claims, **characterized in that** the microwave measuring device comprises at least two antennas (120, 122), of which the one antenna is a transmitter antenna and the other antenna is a receiver antenna, and the two antennas (120, 122) are arranged at such a distance from one another that the one antenna (120) adjacent to the one side of the aperture (104) protrudes through an opening (112) formed in the body (100) into the resonator cavity (118) and the other antenna (122) adjacent to the opposite other side of the aperture (104) protrudes through an opening (114) formed in the body (100) into the resonator cavity (118), wherein, in particular, the antennas (120, 122) are shorted to electrical ground in the region of their free end.

7. The device according to at least one of the preceding claims, **characterized in that** the resonator cavity (118) is configured in a mirror-symmetrical manner with respect to a vertically extending centre-line of the aperture (104) in the installed position.

8. The device according to at least one of the preceding claims, wherein the body (100) comprises a first body portion (100e), a second body portion (100f), and a third body portion (100g), and the aperture (104) is bounded on its one side by the first body portion (100e) and on its opposite other side by the second body portion (100f) as well as on its upper side by the third body portion (100g) in the installation position of the measuring device, such that the third body portion (100g) connects the first body portion (100e) and the second body portion (100f) to one another and the first body portion (100e) and the second body portion (100f) respectively form a free leg and have a free end located adjacent to the open region of the aperture (104) forming a portion of a bottom side (100d) of the body (100) in the installed position of the measuring device,
**characterised in that** the open region (104d) of the aperture (104) is closable at least during the operation of the measuring device by the arrangement of a guide element (160) simultaneously at the free end of the first body portion (100e) and at the free end of the second body portion (100f), and the resonator cavity (118) comprises a first portion (118e), a second portion (118f), a third portion (118g), and a fourth portion (118h), of which the first portion (118e) is formed in the first body portion (100e) and is open outwardly at its free end (118ee), the second portion (118f) is formed in the second body portion (100f) and is open outwardly at its free end (118ff), the third portion (118f) is formed in the third body portion (100g), and the fourth portion (118h) is formed in the guide element (160), which, when the guide element (160) is arranged at the free ends of the first and second body portions (100e, 100f), communicates with the first portion (118e) and the second portion (118f) of the resonator cavity (118).

9. The device according to claim 8, **characterized in that** the guide element (160) comprises a measuring window (109) at its side (160a) which faces towards the body (100) and the aperture (104) and, in the installed position of the measuring device, forms a top side, via which the fourth portion (118h) of the resonator cavity (118) formed in the guide element (160) is open towards the open region of the aperture (104), and/or the fourth portion (118h) of the resonator cavity (118) formed in the guide element (160) comprises two ends (118ha, 118hb), which are open on the side of the guide element (160) facing the body (100) and the aperture (104) and of which, when the guide element is arranged at the free ends of the first and second body portions (100e, 100f), the one end (118ha) of the fourth portion (118h) of the resonator cavity (118) is aligned with the free end of the first body portion (100e) and the other end (118hb) of the fourth portion (118h) of the resonator cavity (118) is aligned with the free end of the second body portion (100f), and/or comprises a preferably groove-like or channel-like recess (162), which opens to the open region (104d) of the aperture (104) and is oriented and configured in relation to the open region (104d) of the aperture (104) such that, in the installed position of the measuring device when the arrangement of the aperture (104) and the recess (162) of the guide element (160) is aligned with the cavity (16c) of the strand guide channel (16), the body (100) can be arranged with one of its end faces (100a, 100b) on the strand guide channel (16) or can be fit into the strand guide channel (16) with its two front faces (100a, 100b).

10. The device according to at least one of the preceding claims, **characterized in that** the at least one high-frequency unit (130, 132) is at least partially shielded by a high-frequency shielding element (141).

11. A suction conveyor belt of a shredding machine of the tobacco-processing industry for conveying material, in particular tobacco, having at least one outwardly, preferably downwardly, open strand guide channel (16), the cavity (16c) of which is bounded by two lateral channel shears (16a, 16b) and a suction belt (17) along a conveying path,
**characterized by** a measuring device according to at least one of the preceding claims.

## Revendications

1. Dispositif de mesure pour un transporteur à bande aspirante d'une machine à fabriquer des tiges de l'industrie de transformation du tabac pour un transport de matériau, en particulier de tabac, le transporteur à bande aspirante comprenant au moins un canal de guidage de tiges (16) ouvert vers l'extérieur, de préférence vers le bas, dont la cavité (16c) est délimitée par deux joues de canal latérales (16a, 16b) et une bande aspirante (17) le long d'un trajet de transport,
le dispositif de mesure étant prévu pour déterminer des propriétés du matériau transporté le long du trajet de transport et comprenant un corps (100), au moins un dispositif de mesure à micro-ondes et au moins une cavité résonante (118),
le corps (100) comprenant une première face frontale (100a) et une deuxième face frontale opposée (100b) ainsi qu'un jour (104) débouchant dans les deux faces frontales (100a, 100b) et pourvu d'une zone (104d) ouverte vers l'extérieur, de préférence dans la position de montage du dispositif de mesure, vers le bas, et étant conçu de telle sorte que le corps (100) puisse être disposé dans la position de montage du dispositif de mesure en alignant le jour (104) avec la cavité (16c) du canal de guidage de tiges (16) avec l'une de ses faces frontales (100a, 100b) sur le canal de guidage de tiges (16) ou puisse être ajusté dans le canal de guidage de tiges (16) avec ses deux faces frontales (100a, 100b), et
la cavité résonante (118) étant formée à l'intérieur du corps (100) au voisinage du jour (104) et étant ouverte vers le jour (104) par l'intermédiaire d'au moins une fenêtre de mesure (108),
**caractérisé en ce que**
le dispositif de mesure à micro-ondes est divisé en au moins une unité haute fréquence (130, 132) et en une unité de traitement (134), et
sur et/ou dans le corps (100), ladite au moins une unité haute fréquence (130, 132) est agencée à proximité du jour (104) et l'unité de traitement (134) est agencée à distance du jour (104).

2. Dispositif selon la revendication 1, **caractérisé en ce que** le dispositif de mesure à micro-ondes comprend deux unités haute fréquence (130, 132) espacées l'une de l'autre, dont une unité haute fréquence (130) est une unité d'émission haute fréquence (130) et l'autre unité haute fréquence (132) est une unité de réception haute fréquence (132), en particulier l'unité d'émission haute fréquence (130) étant disposée sur une première face frontale (100a) du corps (100) et l'unité de réception haute fréquence (132) étant agencée sur l'autre face frontale (100b) du corps (100), et/ou **en ce que** ladite au moins une unité haute fréquence (130, 132) est agencée sur au moins une face frontale (100a, 100b) du corps (100),

3. Dispositif selon la revendication 2, le corps (100) comprenant une première section de corps (100e), une deuxième section de corps (100f) et une troisième section de corps (100g), et le jour (104) étant délimité sur son premier côté par la première section de corps (100e) et sur son autre côté opposé par la deuxième section de corps (100f) et sur son côté supérieur dans la position de montage de l'appareil de mesure, par la troisième section de corps (100g), de sorte que la troisième section de corps (100g) relie la première section de corps (100e) et la deuxième section de corps (100f) l'une à l'autre et la première section de corps (100e) et la deuxième section de corps (100f) forment chacune une branche libre.
**caractérisé en ce que** ladite au moins une unité haute fréquence (130, 132) est disposée avec au moins une section à au moins une des première et deuxième sections de corps (100e, 100f).

4. Dispositif selon au moins l'une quelconque des revendications précédentes, **caractérisé en ce que** le corps (100) contient au moins un passage traversant (110) débouchant dans les deux faces frontales (100a, 100b), à travers lequel est posé au moins un câble (140), en particulier réalisé sous la forme d'un câble coaxial.

5. Dispositif selon la revendication 2 ainsi que selon la revendication 4, **caractérisé en ce que** le câble (140) est raccordé à l'unité d'émission haute fréquence (130) et/ou à l'unité de réception haute fréquence (132) et **en ce que** notamment le dispositif de mesure à micro-ondes comprend un oscillateur local générant une fréquence porteuse, auquel le câble (140) est raccordé.

6. Dispositif selon au moins l'une quelconque des revendications précédentes, **caractérisé en ce que** le dispositif de mesure à micro-ondes comprend au moins deux antennes (120, 122), dont la première antenne est une antenne émettrice et l'autre antenne est une antenne réceptrice, et que les deux antennes (120, 122) sont agencées à une distance telle l'une de l'autre que la première des antennes (120) fait saillie dans la cavité résonante (118) au voisinage d'un côté du passage traversant (104) à travers une ouverture (112) formée dans le corps (100) et que l'autre antenne (122) fait saillie dans la cavité résonante (118) au voisinage de l'autre côté du jour (104) à travers une ouverture (114) formée dans le corps (100), en particulier les antennes (120, 122) étant court-circuitées avec une masse électrique dans la zone de leur extrémité libre.

7. Dispositif selon au moins l'une quelconque des revendications précédentes, **caractérisé en ce que** la cavité résonante (118) est symétrique en miroir par rapport à une ligne médiane du passage traversant (104) qui s'étend verticalement en position de montage.

8. Dispositif selon l'une quelconque des revendications précédentes, le corps (100) comprenant une première section de corps (100e), une deuxième section de corps (100f) et une troisième section de corps (100g), et le jour (104) étant délimité sur son premier côté par la première section de corps (100e) et sur son autre côté opposé par la deuxième section de corps (100f) et sur son côté supérieur dans la position de montage de l'appareil de mesure, par la troisième section de corps (100g), de sorte que la troisième section de corps (100g) relie la première section de corps (100e) et la deuxième section de corps (100f) l'une à l'autre et que, respectivement, la première section de corps (100e) et la deuxième section de corps (100f) forment chacune une branche libre et comprennent une extrémité libre adjacente à la zone ouverte du jour (104), formant une partie d'une face inférieure (100d) du corps (100) dans la position de montage du dispositif de mesure,
**caractérisé en ce que** la zone ouverte (104d) du jour (104) peut être fermée au moins pendant le fonctionnement du dispositif de mesure par agencement d'un élément de guidage (160) simultanément à l'extrémité libre de la première section de corps (100e) et à l'extrémité libre de la deuxième section de corps (100f), et que la cavité résonante (118) comprend une première section (118e), une deuxième section (118f), une troisième section (118g) et une quatrième section (118h), dont la première section (118e) est formée dans la première section de corps (100e) et est ouverte vers l'extérieur à l'extrémité libre (118ee) de celle-ci, la deuxième section (118f) est formée dans la deuxième section de corps (100f) et est ouverte vers l'extérieur à l'extrémité libre (118ff) de celle-ci, la troisième section (118f) est formée dans la troisième section de corps (100g) et la quatrième section de corps (118h) est formée dans l'élément de guidage (160), la quatrième section étant en liaison avec la première section (118e) et la deuxième section (118f) de la cavité résonante (118) lors de l'agencement de l'élément de guidage (160) aux extrémités libres des première et deuxième sections de corps (100e, 100f).

9. Dispositif selon la revendication 8, **caractérisé en ce que** l'élément de guidage (160) comprend, sur son côté (160a) orienté vers le corps (100) et vers le jour (104) et formant un côté supérieur dans la position de montage du dispositif de mesure, une fenêtre de mesure (109) par l'intermédiaire de laquelle la quatrième section (118h) de la cavité résonante (118) formée dans l'élément de guidage (160) est ouverte vers la zone ouverte du jour (104), et/ou que la quatrième section (118h) de la cavité résonante (118) formée dans l'élément de guidage (160) comprend deux extrémités (118ha, 118hb) qui sont ouvertes dans le côté de l'élément de guidage (160) orienté vers corps (100) et le jour (104), et dont, par l'agencement de l'élément de guidage aux extrémités libres des première et seconde section de corps (100e, 100f), la première extrémité (118ha) de la quatrième section (118h) de la cavité résonante (118) est orientée vers l'extrémité libre de la première section de corps (100e) et l'autre extrémité (118hb) de la quatrième section (118h) de la cavité résonante (118) est orientée vers l'extrémité libre de la deuxième section de corps (100f), et/ou qu'un évidement (162), de préférence en forme de rainure ou de canal, ouvert vers la zone ouverte (104d) du jour (104), qui est orienté par rapport à la zone ouverte (104) du jour (104) et formé de sorte que dans la position de montage du dispositif de mesure, en alignant l'agencement constitué par le jour (104) et l'évidement (162) de l'élément de guidage (160) avec la cavité (16c) du canal de guidage de tiges (16), le corps (100) puisse être agencé sur le canal de guidage de tiges (16) avec l'une de ses faces frontales (100a, 100b) ou puisse être ajusté dans le canal de guidage de tiges (16) avec ses deux faces frontales (100a, 100b).

10. Dispositif selon au moins l'une des revendications précédentes, **caractérisé en ce que** ladite au moins une unité haute fréquence (130, 132) est protégée au moins en partie par un élément de blindage haute fréquence (141).

11. Transporteur à bande aspirante d'une machine à fabriquer des tiges de l'industrie de transformation du tabac pour un transport de matériau, en particulier de tabac, avec au moins un canal de guidage de tiges (16) ouvert vers l'extérieur, de préférence vers le bas, dont la cavité (16c) est délimitée par deux joues de canal latérales (16a, 16b) et une bande aspirante (17) le long d'un trajet de transport,
**caractérisé par** un dispositif de mesure selon au moins l'une des revendications précédentes,
